(19) Europäisches Patentamt / European Patent Office / Office européen des brevets

(11) **EP 3 929 652 B1**

(12) **EUROPEAN PATENT SPECIFICATION**

(45) Date of publication and mention
of the grant of the patent:
**21.08.2024 Bulletin 2024/34**

(21) Application number: **20181809.3**

(22) Date of filing: **24.06.2020**

(51) International Patent Classification (IPC):
***G02B 27/28*** *(2006.01)*

(52) Cooperative Patent Classification (CPC):
**G02B 27/286; G02B 27/283**

(54) **OPTICAL CONVERTER, OPTICAL COUPLER, OPTICAL DEVICE, AND METHOD FOR GENERATING POLARIZED RADIATION**

OPTISCHER WANDLER, OPTISCHER KOPPLER, OPTISCHE VORRICHTUNG UND VERFAHREN ZUR ERZEUGUNG POLARISIERTER STRAHLUNG

CONVERTISSEUR OPTIQUE, COUPLEUR OPTIQUE, DISPOSITIF OPTIQUE ET PROCÉDÉ POUR GÉNÉRER UN RAYONNEMENT POLARISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.12.2021 Bulletin 2021/52**

(73) Proprietor: **Universität Stuttgart
70174 Stuttgart (DE)**

(72) Inventors:
• **VOSS, Andreas, Dr.
45138 Essen (DE)**

• **ABDOU AHMED, Marwan, Dr.
70565 Stuttgart (DE)**

(74) Representative: **Müller-Boré & Partner
Patentanwälte PartG mbB
Friedenheimer Brücke 21
80639 München (DE)**

(56) References cited:
**EP-A1- 0 467 447     US-B2- 10 654 130**

**Description**

The invention relates to an optical device for generating polarized radiation, an optical converter for generating polarized radiation, and a method for generating polarized radiation.

The invention lies in the field of optics, in particular in the field of polarized radiation optics. In particular, for certain applications the necessity of using polarized radiation arises, such as in high energy optics. Means for transmitting radiation from a light source capable of producing polarized beams, such as high energy lasers, are often incapable of maintaining a highly polarized state of the beam over long distances. In particular, polarized beams transmitted via multimode fiber optics are prone to a significant deterioration of the polarized state of the beams even over short distances. However, polarizing such a light beam by means of a polarizing filter or unit is typically accompanied by a significant loss in intensity, which either has to be accepted or compensated for, such as by using a higher intensity light source. In either case, however, the efficiency of the generating and transporting of such a polarized beam is reduced.

EP 0 467 447 A1 describes an image projection apparatus, which comprises an illumination system having a first, round lens plate and a second, half-round lens plate. A combination of a special polarization-sensitive beam splitter and a polarization rotator is arranged in the path of the beam supplied by this system and converts the beam into two sub-beams having the same state of polarization which jointly illuminate a display panel in a uniform manner and optimally fill the surface area of this panel and a subsequent projection lens system.

US 10,654,130 B2 describes a polarization module and a laser exposure apparatus having a polarization module including a first lens and a second lens that reduce a one-directional length of a cross-section of an incident laser beam having an optical axis. A polarization beam splitter divides the laser beam passing through the first and second lenses into two laser beams that are polarized in different directions with respect to each other. A first prism lens and a second prism lens emit an output laser beam by controlling the two laser beams that are divided by the polarization beam splitter to positions that are symmetrical with respect to the optical axis. At least one half wave plate is disposed between the polarization beam splitter and the first prism lens.

According to one aspect, it is therefore a problem to be solved by the present invention to provide means for generating polarized radiation from a light source with a reduced loss of intensity and improved efficiency.

The problem is solved by an optical device and method for generating polarized radiation, and an optical converter and

method for generating polarized radiation according to the subject-matter of the independent claims. Preferred embodiments form the subject of the dependent claims.

One aspect relates to an optical converter for generating polarized radiation, comprising a polarizing beam splitter being configured to split an incident light beam into a first beam and a second beam, wherein the first beam has a first beam profile in a cross-sectional plane perpendicular to a propagation direction of the first beam, and the second beam has a second beam profile in a cross-sectional plane perpendicular to a propagation direction of the second beam, the first beam having a first polarization state and the second beam having a second polarization state being different from the first polarization state; a beam recombination unit being configured to combine the first beam and the second beam into a single output beam having a final polarization state, wherein the output beam has an output beam profile in a cross-sectional plane perpendicular to a propagation direction of the output beam and wherein the beam recombination unit is configured to align the first beam and the second beam such that the output beam profile substantially corresponds to a beam profile of the first beam profile being adjacent to the second beam profile; and a beam polarization converter being configured to convert either the first polarization state of the first beam to the second polarization state or the second polarization state of the second beam to the first polarization state, such that the output beam has the final polarization state corresponding to either the second polarization state or the first polarization state, respectively. Alternatively, the optical converter comprises a beam polarization converter being configured to convert the first polarization state of the first beam and the second polarization state of the second beam to a third polarization state different from the first polarization state and the second polarization state, such that the output beam has a final polarization state corresponding to the third polarization state.

The optical converter is configured to generate a beam of polarised radiation, for example in particular electromagnetic radiation in the wavelength range of 450 nm to 2500 nm. However, the optical converter is not limited to such a wavelength range, and can e.g. generate electromagnetic radiation of shorter wavelengths than 450 nm or of longer wavelengths than 2500 nm. While the optical converter is primarily configured to generate a beam of polarized radiation from an incident light beam, the optical converter may also comprise at least one light source to generate said incident light beam.

The polarization state of electromagnetic beams is herein defined using Stoke's parameters $S_0$, $S_1$, $S_2$, and $S_3$, wherein said parameters allow a representation of the polarization state of the beam in terms of the total intensity of the beam, the degree of polarization of the beam, and shape parameters corresponding to the shape of the polarization ellipse of the beam. The polarization ellipse corresponds to the ellipse drawn out by the electric field vector of the beam in the x-y plane. Examples of possible polarization states using Stoke's parameters are given in Table 1 below.

Table 1

| Polarization state | S0 | S1 | S2 | S3 |
|---|---|---|---|---|
| Linearly polarized (horizontal) | 1 | 1 | 0 | 0 |
| Linearly polarized (vertical) | 1 | -1 | 0 | 0 |
| Linearly polarized (+45°) | 1 | 0 | 1 | 0 |
| Linearly polarized (-45°) | 1 | 0 | -1 | 0 |
| Right-hand circular polarized | 1 | 0 | 0 | 1 |
| Left-hand circular polarized | 1 | 0 | 0 | -1 |
| Unpolarized | 1 | 0 | 0 | 0 |

In particular, the degree of polarization p of a beam may be calculated using Stoke's parameters:

$$p = \frac{\sqrt{(S_1)^2 + (S_2)^2 + (S_3)^2}}{S_0} \qquad (1)$$

Furthermore, $p$ is restrained on the domain $0 \leq p \leq 1$. Thus a fully polarized beam will have a degree of polarization of $p = 1$, while a fully unpolarized beam will have a degree of polarization of $p = 0$ and a partially polarized beam will have a degree of polarization of $0 < p < 1$.

The beam profile of a beam corresponds to a shape of its intensity profile in a cross-sectional plane perpendicular to a propagation direction of said beam. The beam propagation direction used within this description may correspond in particular to an average beam propagation direction, in particular in between beam propagation direction changing elements of the optical converter and/or the optical coupler and/or the optical device. An energy flux density of a light beam may be calculated on the basis of a plane surface through which the light beam passes. Said energy flux density is dependent on the orientation of a normal vector of said plane surface with respect to the light beam. The average beam propagation direction may be parallel to a normal vector of a plane surface area that maximises the energy flux density of the light beam through said plane surface area.

The cross-sectional plane, in which the profile is determined, has a normal vector that is parallel to the beam propagation direction. The intensity profile of a beam in said cross-sectional plane corresponds to the distribution of intensity of the beam across the cross-sectional plane, wherein said intensity distribution has a maximum cross-sectional intensity. The beam profile of the beam may thus correspond to the shape of its intensity profile, wherein said shape may be defined by the area of the intensity profile in which the local intensity exceeds an intensity threshold of at least 1%, preferably at least 5% of the maximum cross-sectional intensity. The incident light beam, the first light beam and the second light beam, respectively, have an incident light beam profile, a first beam profile and a second beam profile.

The optical converter comprises a polarizing beam splitter, wherein the polarizing beam splitter is configured to split the incident light beam into two beams. In particular, the incident light beam may be split by refraction, reflection and/or internal interference by the polarizing beam splitter, as will be further explained below. Specifically, the polarizing beam splitter is configured to split the incident light beam into the first beam having a first polarization state and the second beam having a second polarization state.

The first beam may have a first degree of polarization that is substantially identical to a second degree of polarization of the second beam, wherein the degree of polarization is defined as in equation (1) above. Substantially identical with respect to degrees of polarization is to be understood such that a difference between the first degree of polarization and the second degree of polarization does not exceed a maximum of 0.2, preferably does not exceed a maximum of 0.1, further preferably does not exceed a maximum of 0.05, most preferably does not exceed a maximum of 0.01. Furthermore, the polarizing beam splitter may be configured to split the incident light beam into the first beam and the second beam such that the first beam is orthogonally polarized relative to the second beam. Therefore, the first beam and the second beam may be linearly orthogonally polarized, such as for example the first beam being horizontally linearly polarized and the second beam being vertically linearly polarized or vice versa. Alternatively, the first beam and the second beam may be circular orthogonally polarized, such as for example the first beam being right-handed circular polarized and the second beam being left-handed circular polarized or vice versa.

The first degree of polarization and/or the second degree of polarization may have a value of at least 0.75, preferably at least 0.8, further preferred at least 0.9.

The optical converter comprises a beam polarization converter being configured to convert either the first polarization state of the first beam to the second polarization state or the second polarization state of the second beam to the first polarization state, such that the output beam has a final polarization state corresponding to either the second polarization state or the first polarization state, respectively. In particular, the first beam having the second polarization state or the second beam having the first polarization state may have a third degree of polarization that is substantially identical to a second degree of polarization of the second beam having the second polarization state and/or the first degree of polarization of the first beam having the first polarization state. Substantially identical with respect to degrees of polarization is to be understood such that a difference between two degrees of polarization does not exceed a maximum of 0.2, preferably does not exceed a maximum of 0.1, further preferably does not exceed a maximum of 0.05, most preferably does not exceed a maximum of 0.01. Thus, for example, the first degree of polarization of the first beam having the first polarization state before passing through the beam polarization converter may be substantially identical to the third degree of polarization of the first beam having the second polarization state. Similarly, the second degree of polarization of the second beam having the second polarization state before passing through the beam polarization converter may be substantially identical to the third degree of polarization of the second beam having the first polarization state. In other words, the beam polarization converter may adjust the polarization state of the first beam or the second beam without substantially reducing the degree of polarization of the first beam or the second beam, respectively. Alternatively or additionally, the third degree of polarization of the first beam having the second polarization state after passing through the beam polarization converter may be substantially identical to the second degree of polarization of the second beam having the second polarization state, or the third degree of polarization of the second beam having the first polarization state after passing through the beam polarization converter may be substantially identical to the first degree of polarization of the first beam having the first polarization state. In other words, the beam polarization converter may adjust the polarization state of the first beam such that a degree of polarization of the first beam exiting the beam polarization converter is substantially identical to a degree of polarization of the second beam or may adjust the polarization state of the second beam such that a degree of polarization of the second beam exiting the beam polarization converter is substantially identical to a degree of polarization of the first beam. In particular, the beam polarization converter may alter the polarization state of the first beam or the second beam by introducing a phase shift between two perpendicular polarization components of the first beam or the second beam, respectively.

Alternatively, the optical converter comprises a beam polarization converter being configured to convert the first polarization state of the first beam and the second polarization state of the second beam to a third polarization state different from the first polarization state and the second polarization state, such that the output beam has a final polarization state corresponding to the third polarization state. In particular, the first beam having the third polarization state may have a fourth degree of polarization that is substantially identical to the first degree of polarization of the first beam having the first polarization state and/or the second beam having the third polarization state may have a fifth degree of polarization that is substantially identical to the second degree of polarization of the second beam having the second polarization state. In other words, the beam polarization converter may adjust the polarization state of the first beam and the second beam without substantially reducing the degree of polarization of the first beam and the second beam, respectively. In particular, the fourth degree of polarization may be substantially identical to the fifth degree of polarization. In particular, the beam polarization converter may alter the polarization state of the first beam and the second beam by introducing a phase shift between two perpendicular polarization components of the first beam and the second beam, respectively.

The optical converter further comprises a beam recombination unit configured to combine the first beam and the second beam into a single output beam, wherein the output beam has an output beam profile in a cross-sectional plane perpendicular to a propagation direction of the output beam and wherein the beam recombination unit is configured to align the first beam and the second beam such that the output beam profile substantially corresponds to a beam profile of the first beam profile being adjacent to the second beam profile. In particular, the beam recombination unit may be configured such that the first beam and the second beam are aligned to form a single output beam, wherein the shape of the output beam profile corresponds to a combined shape of the first beam profile and the shape of the second beam, wherein the shape of the output beam profile forms a connected space. The term connected space is meant to be understood in the mathematical sense, wherein the shape of the output beam is a space that cannot be represented as the union of two or more disjoint, non-empty open subsets/sub-shapes. The beam recombination unit may be configured to reflect and/or rotate at least one of the first beam and the second beam.

Preferably, the polarizing beam splitter is configured such that a sum of a total beam intensity of the first beam emerging and/or being emitted from the polarizing beam splitter and a total beam intensity of the second beam emerging and/or being emitted from the polarizing beam splitter is at least 80%, preferably at least 90%, further preferably at least 95% of a total intensity of the incident light beam.

Preferably, the beam polarization converter is configured such that a total beam intensity of the first beam and/or the second beam emerging and/or being emitted from the beam polarization converter is at least 80%, preferably at least 90%, further preferably at least 95% of a total intensity of the first beam and/or second beam being incident on the beam polarization converter, respectively.

Preferably, the optical converter is configured such that a total beam intensity of the output beam is at least 80%, preferably at least 90%, further preferably at least 95% of a total intensity of the incident light beam.

Preferably, the incident light beam profile, the first beam profile and the second beam profile have a semi-circular or semi-elliptical shape, and wherein the output beam profile has a substantially circular or elliptical shape. In particular, the first beam profile may be rotationally symmetrical to the second beam profile. Preferably, the semi-circular shape and/or the semi-elliptical shape may comprise at least one curved, convex edge and at least one substantially straight edge, wherein endpoints of the at least one curved, convex edge and endpoints of the at least one straight edge are connected to define a closed two-dimensional area.

The incident light beam profile, the first beam profile and the second beam profile may be substantially D-shaped. In particular, substantially D-shaped is to be understood within this description as comprising small variations arising from production and environmentally related deviations. In particular, substantially D-shaped is to be understood within this description as comprising a shape comprising one straight edge and one curved, convex edge, wherein one endpoint of the straight edge is connected to one endpoint of the curved, convex edge and another endpoint of the straight edge is connected to another endpoint of the curved, convex edge.

The incident light beam profile, the first beam profile and/or the second beam profile may have a shape that has at least one axial symmetry in the plane of the incident light beam profile, the first beam profile and/or the second beam profile, respectively. In particular, a beam profile is considered to have at least one axial symmetry if there exists a straight, continuous axis that intersects a border of the beam profile in at least two points such that for every point X of the beam profile there exists a point X' (which may be identical to point X) of the beam profile such that a straight line connecting points X and X' intersects said straight axis at a 90° angle halfway between the points X and X'.

Preferably, the first beam profile has a shape substantially identical to a shape of the second beam profile. The shape of a beam profile within the scope of this description is to be understood as the geometric, two-dimensional shape of the beam profile in the corresponding cross-sectional plane. In particular, substantially identical with respect to shapes of beam profiles is to be understood as geometrically similar, such that, for example, the shape of the second beam profile may be obtained from the shape of the first beam profile by uniformly scaling, translating, rotating, and/or reflecting the shape of the first beam profile. In particular, by using a first beam and second beam having beam profiles of geometrically similar shapes, the recombination the first and second beams can be simplified and the need for adjusting the shape of at least one of the first and second beams can be avoided.

Preferably, at least one of the first beam profile and the second beam profile has a shape substantially identical to a shape of the incident light beam profile. In particular, by providing a polarizing beam splitter configured to split the incident light beam into a first beam and second beam, each having a beam profile shape substantially identical to the shape of the incident beam profile, a recombination of the first and second beams can be simplified and the need for adjusting the shape of at least one of the first and second beams can be avoided. Substantially identical in this sense is to be understood such that the shape of the first beam profile and/or the second beam profile and/or the shape of the incident beam profile are geometrically similar, as defined above. Such a polarizing beam splitter may allow a direct control of a shape of the output beam profile as a function of the incident beam profile.

The beam recombination unit may be configured to combine the first beam and the second beam such that the first beam profile and the second profile are aligned along a shared edge in the cross-sectional plane perpendicular to a propagation direction of the output beam. The edge of a beam profile is to be understood as an edge of the shape of the beam profile, as defined above. In particular, the beam recombination unit may be configured to combine the first beam and the second beam, wherein the first beam profile and the second beam profile are aligned in the cross-sectional plane perpendicular to the propagation direction of the output beam, such that the first beam profile and the second beam profile share an infinite number of points, while an area of the shape of the first beam profile and an area of the shape of the second beam profile do not substantially overlap.

The optical converter further comprises a light guide having a cross-section in a plane perpendicular to a transmission direction of light along the light guide having a shape substantially identical to the incident light beam profile, wherein the light guide is configured to guide the incident light beam to the polarizing beam splitter. In particular, the cross-section of the light guide may be semi-circular or semi-elliptical. Preferably, the cross-section of the light guide may be D-shaped.

According to the invention, the light guide is a multi-mode optical fibre.

The optical converter may further comprise a beam profile adjustment unit arranged at least partially along a beam path of the first beam and/or the second beam between the polarizing beam splitter and the beam recombination unit, wherein the beam profile adjustment unit is configured to adjust the first beam profile of the first beam, for example by rotating the first beam around a rotation axis being parallel to a beam propagation direction of the first beam, and/or to adjust the second beam profile of the second beam, for example by rotating the second beam around a rotation axis being parallel to a beam propagation direction of the second beam, respectively. In particular, the beam profile adjustment unit may be configured to adjust the first beam profile and/or the second beam profile by at least once reflecting the first beam and/or the second beam, respectively.

Preferably, the beam profile adjustment unit is configured such that a total beam intensity of the first beam emerging and/or being emitted from the beam profile adjustment unit is at least 80%, preferably at least 90%, further preferably at least 95% of a total intensity of the first beam incident on the beam profile adjustment unit. Preferably, the beam profile adjustment unit is configured such that a total beam intensity of the second beam emerging and/or being emitted from the beam profile adjustment unit is at least 80%, preferably at least 90%, further preferably at least 95%, most preferably 98% of a total intensity of the second beam incident on the beam profile adjustment unit.

Preferably, the beam profile adjustment unit is configured to rotate the first beam profile of the first beam by an angle of 180 degrees or a scalar multiple, preferably an uneven scalar multiple thereof. Alternatively, the beam profile adjustment unit may be configured to rotate the second beam profile of the second beam by an angle of 180 degrees or a scalar multiple, in particular an uneven scalar multiple thereof. Alternatively, the beam profile adjustment unit may be configured to rotate the first beam profile of the first beam by a first angle and to rotate the second beam profile of the second beam by a second angle, wherein, preferably, the rotation of the first beam profile by the first angle and the rotation of the second beam profile by the second angle may result in a relative rotation of the first beam profile relative to the second beam profile of 180° or a scalar multiple, in particular an uneven scalar multiple thereof.

Preferably, the beam profile adjustment unit may comprise at least one mirror configured to reflect the first beam and/or the second beam, respectively. Preferably, the beam profile adjustment unit is configured such that the first beam and/or the second beam is reflected at least twice by the beam profile adjustment unit. In particular, the beam profile adjustment unit may comprise one mirror, wherein the beam profile adjustment unit is configured such that the first beam and/or the second beam is reflected at least twice on said one mirror. Preferably, the at least one mirror may comprise at least two sub-mirrors.

In particular, the optical converter may be configured such that, in a case where the beam profile rotation is accomplished by reflection of the first beam and/or the second beam, the first beam is reflected an uneven number of times, including any possible reflections of the first beam during the splitting of the incident light beam at the polarizing beam splitter, and the second beam is reflected an even number of times, including any possible reflections of the second beam during the splitting of the incident light beam at the polarizing beam splitter. Alternatively, the optical converter may be configured such that, in a case where the beam profile rotation is accomplished by reflection of the first beam and/or the second beam, the first beam is reflected an even number of times, including any possible reflections of the first beam during the splitting of the incident light beam at the polarizing beam splitter, and the second beam is reflected an uneven number of times, including any possible reflections of the second beam during the splitting of the incident light beam at the polarizing beam splitter. In other words, the optical converter may be configured such that, in a case where the beam profile rotation is accomplished by reflection of the first beam and/or the second beam, one of the first beam and the second beam is reflected an even number of times, while the other of the first beam and the second beam is reflected an uneven number of times.

Preferably, the at least one mirror comprises at least one high-reflection coating and/or at least one optical grating and/or at least one distributed Bragg reflector element. In particular, the at least one mirror may be at least one dielectric mirror. Preferably, the at least one mirror, in particular each one of the at least one mirror, has a reflectance over 95%, preferably over 99%, further preferably over 99.99%.

Preferably, the beam profile adjustment unit may comprise at least two lenses arranged along a beam path of the first beam and/or the second beam, wherein the at least two lenses are configured to rotate the beam profile of the first beam or the second beam, respectively. In particular, the beam profile adjustment unit may comprise a first lens, preferably a first convex lens, arranged along a beam path of the first beam or the second beam and configured to focus the first beam or the second beam, respectively, in a first focal point. The beam profile adjustment unit may further comprise a second lens, preferably a second convex lens, arranged along a beam path of the first beam or the second beam, along which the first lens is arranged, wherein the second lens has a second focal point coincident with the first focal point, wherein the first focal point and the second focal point are located along the beam path of the first beam or the second beam, respectively, between the first lens and the second lens. Thereby, a parallel beam focused by the first lens converges from the first lens onto the focal point and subsequently diverges onto the second lens, wherein the second lens is configured to re-establish the parallel beam, such that the parallel beam after the second lens has a rotated beam profile compared to a beam profile of the parallel beam before the first lens.

The beam polarization converter may be at least partially arranged along a beam path of the first beam and/or the second beam between the polarizing beam splitter and the beam recombination unit. In particular, the beam path of the first beam corresponds to a route of first beam taken within the optical converter and the beam path of the second beam corresponds to a route of the second beam taken within the optical converter. In particular, the beam polarization converter may be at least partially arranged between the polarizing beam splitter and the beam profile adjustment unit. Alternatively or additionally, the beam polarization converter may be at least partially arranged within the beam profile adjustment unit. Alternatively or additionally, the beam polarization converter may be at least partially arranged between the beam profile adjustment unit and the beam recombination unit.

Preferably, the beam recombination unit may comprise at least one mirror element, wherein the at least one mirror element is configured to reflect one of the first beam and the second beam and allow the other one of the first beam and the second beam to pass to recombine the first and second beams to form the single output beam. Preferably, the at least one mirror element is a scraper mirror. The scraper mirror may have at least one surface area configured to reflect electromagnetic radiation. The one of the first beam and the second beam to be reflected by the scraper mirror may impact on the scraper mirror in a reflection area of the scraper mirror.

Preferably, the beam recombination unit comprises at least one beam absorber configured to absorb any part of the one of the first beam and second beam to be reflected that does not impact the at least one mirror element, for example due to a misalignment of the at least one surface area and the reflection area.

Preferably, the at least one surface area is larger than the reflection area. In particular, by providing a scraper mirror having at least one surface area being larger than the reflection area, a configuration of the at least one mirror element to adjust the recombination of the first and second beams is facilitated. The at least one surface area is preferably semi-circular or semi-elliptical, further preferably D-shaped.

Preferably, the scraper mirror may comprise a reflection edge. In particular, the scraper mirror may be configured such that an edge of one of the first beam profile and the second beam profile of the one of the first beam and the second beam to be reflected by the scraper mirror, respectively, is aligned along one side of the reflection edge of the scraper mirror. Preferably the scraper mirror may be further configured such that an edge of the other one of the first beam profile and the second beam profile of the other one of the first beam and the second beam to be allowed to pass by the scraper mirror, respectively, is aligned along the other side of the reflection edge of the scraper mirror. In particular, by aligning the first and second beams in such a fashion along opposite sides along the reflection edge, the beam recombination unit and/or the scraper mirror is able to recombine the first beam and the second beam such that the output beam has an output beam profile corresponding to the first beam profile and the second beam profile being adjacent to one another.

Preferably, the scraper mirror has a thickness, wherein said thickness is measured perpendicular to the surface area and/or the reflection area of the scraper mirror. Preferably, said thickness increases continuously, in particular linearly, from the reflection edge in a direction perpendicular to said reflection edge and along the scraper mirror. In particular, the scraper mirror having said thickness may be configured such that no part of the scraper mirror blocks the one of the first beam and the second beam to be allowed to pass by the scraper mirror.

Preferably, the beam recombination unit may comprise at least one optical element, wherein the at least one optical element comprises a first reflective section and a first transmission section, wherein the first reflective section is configured to reflect one of the first beam and the second beam and the first transmission section is configured to allow the other one of the first beam and the second beam to pass to recombine the first and second beams to form the single output beam.

The first reflective section may have a first surface area configured to reflect electromagnetic radiation. The one of the first beam and the second beam to be reflected by the first reflective section may impact on the first reflective section in a first reflection area.

Preferably, the beam recombination unit comprises at least one beam absorber configured to absorb any part of the one of the first beam and second beam to be reflected that does not impact the first reflective section, for example due to a misalignment of the first surface area and the first reflection area. Preferably, the first surface area is larger than the first reflection area. The first surface area is preferably semi-circular or semi-elliptical, further preferably D-shaped.

The first transmission section may have a second surface area configured to transmit electromagnetic radiation. The one of the first beam and the second beam to be transmitted by the first transmission section may impact on the first transmission section in a first transmission area.

Preferably, the beam recombination unit comprises at least one beam absorber configured to absorb any part of the one of the first beam and second beam to be transmitted that does not impact the first transmission section, for example due to a misalignment of the second surface area and the first transmission area. Preferably, the second surface area is larger than the first transmission area. The second surface area is preferably semi-circular or semi-elliptical, further preferably D-shaped.

Preferably, the first reflective section may comprise a highly reflective coating and/or at least one optical grating and/or at least one distributed Bragg reflector element.

Preferably, the first transmission section may comprise at least one anti-reflection coating.

Preferably, the first transmission section may have a smaller thickness than a thickness of the first reflection section. The thickness of the first transmission section may be measured as the minimum thickness of the at least one optical element measured from any point of the first transmission area to an opposite side of the optical element. The thickness of the first reflection section may be measured as the minimum thickness of the at least one optical element measured from any point of the first reflective area to an opposite side of the optical element.

Preferably, the optical converter may further comprise a cooling device, wherein the cooling device is thermally coupled to at least one of the polarizing beam splitter, the beam profile adjustment unit, the beam polarization converter and/or the beam recombination unit. The cooling device may comprise at least one passive cooling element, preferably a heat sink, and/or at least one active cooling element, preferably a thermoelectric element, and/or at least one fluid cooling element.

Preferably, the polarizing beam splitter may be a variable polarizing beam splitter, wherein at least one configuration unit is configured to control the variable polarizing beam splitter to control at least one parameter of the splitting of the incident light beam. In particular, the variable polarizing beam splitter may be configured to be rotatable around at least one axis and/or to be translatable along at least one axis to change the direction of the first beam and the second beam that are generated by the splitting of the incident light beam. By providing a rotatable and/or translatable variable polarizing beam splitter, a shape and/or direction of the output beam may be adjusted. Furthermore, it may also be possible to compensate for physical changes of the optical converter, for example due to temperature gradients and/or minor deformations in components of the optical converter. Additionally, it may also be possible to compensate for variations in the wavelength of the incident light beam and to thus make the optical converter compatible with a broader range of incident light beam wavelengths.

Preferably, the beam profile adjustment unit may be a variable beam profile adjustment unit, wherein at least one configuration unit is configured to control the variable beam profile adjustment unit to control at least one parameter of the rotation/adaption of the first beam profile and/or of the rotation/adaption of the second beam profile. In particular, the variable beam profile adjustment unit may be configured to variably change the angle by which the first beam profile is rotated. In particular, the variable beam profile adjustment unit may be configured to be rotatable around at least one axis and/or to be translatable relative to at least the first beam and/or the second beam. By providing a rotatable and/or translatable variable beam profile adjustment unit, a shape and/or direction of the output beam may be adjusted. Furthermore, it may also be possible to compensate for physical changes of the optical converter, for example due to temperature gradients and/or minor deformations in components of the optical converter.

Preferably, the beam polarization converter may be a variable beam polarization converter, wherein at least one configuration unit is configured to control the variable beam polarization converter to control at least one parameter of the conversion of the first polarization state. In particular, the variable beam polarization converter may be configured to variably change the amount by which the first polarization state is changed. in particular, the amount by which the first polarization state is changed may be dependent upon the wavelength of the first beam, and therefore it may be possible to increase a range of compatible wavelengths of the optical converter.

Preferably, the beam recombination unit may be a variable beam recombination unit, wherein at least one configuration unit is configured to control the variable beam recombination unit to control at least one parameter of the recombination of the first beam and the second beam. In particular, the variable beam recombination unit may be configured to be rotatable around at least one axis and/or to be translatable relative to at least the first beam and/or the second beam. By providing a rotatable and/or translatable variable beam recombination unit, a shape and/or direction of the output beam may be adjusted. Furthermore, it may also be possible to compensate for physical changes of the optical converter, for example due to temperature gradients and/or minor deformations in components of the optical converter.

Preferably, at least one configuration unit is configured to control two or more of the variable polarizing beam splitter, the variable beam profile adjustment unit, the variable beam polarization converter, and the variable beam recombination unit, as outlined above. By providing such a central configuration unit configured to control at least two components of the optical converter, a configuration process of the optical converter may be simplified and manufacturing costs of the optical converter may be reduced.

The incident light beam may be an unpolarized light beam, preferably an at least substantially unpolarized light beam. Alternatively, the optical converter may comprise an unpolarization unit configured to reduce the degree of polarization, as defined in equation (1) above, of the incident light beam before the incident light beam impacts the polarizing beam splitter to a maximum of 0.2, preferably to a maximum of 0.1, further preferably to a maximum of 0.05, most preferably to a maximum of 0.01. Said unpolarization unit may comprise an optical fibre, preferably a multi-mode optical fibre, having a length of at least 10cm, preferably at least 20cm. By ensuring a low degree of polarization of the incident beam, the generation of the first beam and the second beam having a substantially similar total intensity is facilitated, thereby allowing for the generation of the output beam with a homogeneous intensity distribution in a cross-sectional plane of the output beam perpendicular to the propagation direction of the output beam.

The polarizing beam splitter may comprise at least one thin film polarizer. Thin film polarizers can in particular act as polarizing beam splitters on the basis of Brewster's angle reflections or interference effects of the thin film polarizer. The at least one thin film polarizer may comprise a substrate and an optical coating applied to the substrate. The substrate for the film may either be a plate, which is inserted into the beam at a particular angle, or a wedge of glass that is cemented to a second wedge to form a cube with the film cutting diagonally across its center. The thin film polarizer may be operated to produce two beams forming an angle of 90° relative to one another. The angle of incidence of the incident light beam onto the thin film polarizer may be chosen as either the Brewster's angle or as an angle of less than 45°.

However, the polarizing beam splitter is not limited to thin film polarizers. In particular, the polarizing beam splitter may comprise other optical elements capable of splitting the incident beam into the first beam and the second beam, such as at least one Fresnel reflection polarizer, at least one birefringent polarizer (such as Glan-type prisms, e.g. Glan-Thompson prisms), and/or at least one wire-grid polarizer.

The beam polarization converter may comprise at least one waveplate. A waveplate may also be referred to as retarder or optical retarder. A waveplate is a transparent optical device constructed from a birefringent material and configured to alter the polarization state of electromagnetic radiation propagating through said waveplate. The at least one waveplate may preferably be at least one half-wave plate and/or at least one quarter-wave plate. The at least one waveplate may be made out of quartz. The at least one waveplate may be configured to be replaceable, such that a waveplate comprised in the beam polarization converter may be replaced by a different waveplate. In particular, such a beam polarization converter comprising a replaceable waveplate may allow for the beam polarization converter to be adapted to convert the first beam polarization state to the second beam polarization state for different wavelengths of the first beam and/or the second beam.

However, the beam polarization converter is not limited to waveplates, and may comprise other polarization conversion elements, such as for example at least one acousto-optical polarization converter, at least one electro-optic modulator, at least one photoelastic modulator, and/or at least one liquid crystal variable retarder.

The optical converter may further comprise one or more lens elements, arranged along the beam path of the incident light beam, the first beam, the second beam, and/or the output beam, wherein the one or more lens elements are configured to adjust a convergence, focus, and/or a divergence of the respective beam. In particular, by arranging said one or more lens elements along a beam path, a parallelism of the respective beam may be maintained.

According to a preferred embodiment, an optical converter for generating polarized radiation may comprise:

a polarizing beam splitter having a thin-film polarizer being configured to split an incident light beam into a first beam and a second beam, wherein the incident light beam has a D-shaped incident beam profile in a cross-sectional plane perpendicular to a propagation direction of the incident light beam, wherein the first beam has a first beam profile in a cross-sectional plane perpendicular to a propagation direction of the first beam that is substantially identical to the incident beam profile, and the second beam has a second beam profile in a cross-sectional plane perpendicular to a propagation direction of the second beam that is substantially identical to the incident beam profile, the first beam having a first polarization state being orthogonally polarized relative to a second polarization state of the second beam;

a beam profile adjustment unit being configured to adjust the first beam profile by subsequently reflecting the first beam on a first mirror element, a subsequent second mirror element, and a subsequent third mirror element;

a half-wave plate being configured to convert the first polarization state of the first beam to the second polarization state; and

a beam recombination unit being configured to combine the first beam and the second beam into a single output beam having the second polarization state, wherein the output beam has a substantially circular output beam profile in a cross-sectional plane perpendicular to a propagation direction of the output beam and wherein the output beam profile substantially corresponds to the first beam profile being adjacent to the second beam profile. In this preferred embodiment, the beam recombination unit may in particular be a scraper mirror configured to recombine the first and second beams by reflecting the second beam, wherein the second beam profile is aligned along an edge of the scraper mirror, and letting the first beam pass the scraper mirror without reflection, wherein the first beam profile is aligned along said edge of the scraper mirror.

According to another aspect, there is provided an optical coupler for generating a light beam having a predetermined light beam profile in a plane perpendicular to a propagation direction of the light beam, comprising:

a beam splitter, wherein the beam splitter is configured to split a source light beam from a light source into a first source beam and a second source beam, wherein the first source beam has a first source profile in a plane perpendicular to a propagation direction of the first source beam that is substantially identical to a second source profile of the second source beam, wherein the first source profile is substantially identical to the predetermined light beam profile;

a beam profile adjustment unit, wherein the beam profile adjustment unit is configured to adjust, for example by rotation and/or reflection, the first source profile of the first source beam relative to a beam propagation direction of the first source beam and/or to adjust, for example by rotation and/or reflection, the second source profile of the second source beam relative to a beam propagation direction of the second source beam; and

a beam recombination unit, wherein the beam recombination unit is configured to combine the first source beam and the second source beam into a single light beam having the predetermined light beam profile.

The optical coupler comprises a beam splitter configured to split the source light beam into the first source beam and the second source beam, wherein the source light beam has a source light beam profile in a cross-sectional plane perpendicular to a propagation direction of the source light beam, and wherein the beam splitter is configured to split the source light beam into the first source beam and the second source beam such that the source light beam profile substantially corresponds to a beam profile of the first source beam profile being adjacent to the second source beam profile. In particular, the shape of the source light beam profile corresponds to a combined shape of the first source profile and the shape of the second source profile, wherein the shape of the source light beam profile forms a connected space. In particular, the beam splitter may correspond to the beam recombination unit of the optical converter as outlined above, wherein the beam directions are reversed.

The optical coupler comprises a beam recombination unit, wherein the beam recombination unit is configured to combine the first source beam and the second source beam into the single light beam having the predetermined light beam profile. The predetermined light beam profile may be interchangeably referred to as the single light beam profile herein. In particular, the first source beam and the second source beam may be combined by refraction, reflection and/or internal interference by the beam recombination unit, as will be further explained below. Preferably, the beam recombination unit is configured to combine the first source beam and the second source beam into the single light beam having a substantially unpolarized polarization state. In particular, the beam recombination unit of the optical coupler may correspond to the polarizing beam splitter of the optical converter as outlined above, wherein the beam directions are reversed.

The optical coupler further comprises a beam profile adjustment unit arranged along a beam path of the first source beam and/or the second source beam between the beam splitter and the beam recombination unit, wherein the beam profile adjustment unit is configured to adjust the first source profile of the first source beam, for example by rotation around a rotation axis being parallel to a beam propagation direction of the first source beam, and/or to adjust the second source profile of the second source beam, for example by rotation around a rotation axis being parallel to a beam propagation direction of the second source beam, respectively. In particular, the beam profile adjustment unit of the optical coupler may comprise any combination of features of the beam profile adjustment unit of the optical converter, as outlined above.

The optical coupler may comprise a beam polarization converter, wherein the beam polarization converter is configured to convert at least a first initial polarization state of the first source beam and/or a second initial polarization state of the second source beam, such that the first source beam has a first converted polarization state and/or the second source beam has a second converted polarization state, respectively, wherein the first initial polarization state is different from the first converted polarization state and the second initial polarization state is different from the second converted polarization state, respectively. The beam polarization converter may comprise any combination of features of the beam polarization converter of the optical converter, as outlined above.

The optical coupler further comprises a light guide having a cross-section in a plane perpendicular to a transmission direction of light along the light guide having a shape substantially identical to the single light beam profile, wherein the light guide is configured to guide the single light beam exiting from the beam recombination unit. In particular, the cross-section of the light guide may be semi-circular or semi-elliptical. Preferably, the cross-section of the light guide may be D-shaped.

The light guide is a multi-mode fibre.

According to another aspect, there is provided an optical device for generating polarized radiation, comprising a light source being configured to generate a source light beam; an optical coupler having a combination of features as described above and being configured to generate a single light beam having a predetermined light beam profile from the source light beam; an optical guide, preferably a multi-mode optical fibre, being configured to transmit the single light beam having the predetermined light beam profile; and an optical converter having a combination of features as outline above and being configured to generate the single output beam from the transmitted single light beam having the predetermined light beam profile.

Preferably, the optical device may further comprise a lens assembly configured to optically modify the single output beam. The lens assembly may comprise one or more optical lenses configured to change the propagation direction and/or focus of the single output beam.

According to another aspect, there is provided a method of generating polarized radiation, comprising the steps of:

splitting an incident light beam into a first beam and a second beam, wherein the first beam has a first beam profile in a cross-sectional plane perpendicular to a propagation direction of the first beam, and the second beam has a second beam profile in a cross-sectional plane perpendicular to a propagation direction of the second beam, the first beam having a first polarization state and the second beam having a second polarization state being different from the first polarization state;
converting:

- the first polarization state of the first beam to the second polarization state, or

- the second polarization state of the second beam to the first polarization state, or
- the first polarization state of the first beam and the second polarization state of the second beam to a third polarization state different from the first polarization state and the second polarization state; and

combining the first beam and the second beam into a single output beam having a final polarization state, wherein the final polarization state corresponds to the second polarization state, the first polarization state, or the third polarization state, respectively,
wherein the output beam has an output beam profile in a cross-sectional plane perpendicular to a propagation direction of the output beam and wherein the combining comprises aligning the first beam and the second beam such that the output beam profile substantially corresponds to a beam profile of the first beam profile being adjacent to the second beam profile.

Preferably, method may further comprise a step of adjusting the first beam profile of the first beam, for example by rotating around a rotation axis being parallel to a beam propagation direction of the first beam and/or a step of adjusting the second beam profile of the second beam, for example by rotating around a rotation axis being parallel to a beam propagation direction of the second beam, respectively. In particular, the adjusting of the first beam profile or the adjusting of the second beam profile may include at least once reflecting the first beam and/or the second beam, respectively. In particular, the step of adjusting the first beam profile and/or the step of adjusting the second beam profile may be undertaken after the step of splitting the incident beam, but before the step of combining the first beam and the second beam.

Preferably, the method may further comprise a step of generating the incident light beam, wherein the incident light beam has a predetermined light beam profile in a plane perpendicular to a propagation direction of the incident light beam.

Preferably, the step of generating the incident light beam may further comprise the steps of splitting a source light beam from a light source into a first source beam and a second source beam, wherein the first source beam has a first source profile in a plane perpendicular to a propagation direction of the first source beam that is substantially identical to a second source profile of the second source beam, wherein the first source profile is substantially identical to the predetermined light beam profile; adjusting, for example by rotating and/or reflecting, the first source profile of the first source beam relative to a beam propagation direction of the first source beam and/or adjusting, for example by rotating and/or reflecting, the second source profile of the second source beam relative to a beam propagation direction of the second source beam; and combining the first source beam and the second source beam into a single light beam having the predetermined light beam profile, wherein the single light beam is the incident light beam.

Preferably, the method may further include any combination of the features of the optical coupler, as described herein.

Preferably, the method may further include, between the step of recombining the first source beam and the second source beam into the incident light beam and the step of splitting the incident light beam into the first beam and the second beam, a step of transmitting the incident light beam using an optical guide being configured to transmit the incident light beam having the predetermined light beam profile.

Preferably, the method may further include modifying a focus of the output beam.

Certain other aspects, features and embodiments will be further explained by the following description and accompanying drawings. The following description and accompanying drawings relate to possible aspects / implementations / embodiments of the subject-matter described. It is to be understood that the description and drawings are illustrative only, and do not represent all implementations and/or embodiments consistent with the subject-matter described herein. Instead, they are merely some examples consistent with aspects related to the described subject-matter.

**Figure 1A:** Illustrates a schematic view of an optical converter;
**Figure 1B to 1G:** Illustrate exemplary beam profiles from Figure 1A;
**Figure 2:** Illustrates a schematic view of an alternative optical converter;
**Figure 3:** Illustrates a schematic view of a polarizing beam splitter;
**Figure 4:** Illustrates a schematic view of a beam polarization converter;
**Figure 5A:** Illustrates a schematic view of a beam recombination unit;
**Figure 5B:** Illustrates a cross-sectional view of a beam recombination unit;
Figure 6A: Illustrates a schematic view of an optical coupler;
Figure 6B to 6G: Illustrate exemplary beam profiles from Figure 6A;
Figure 7: Illustrates a flow diagram of a method for generating polarized radiation;
Figure 8 Illustrates a schematic view of an optical converter with modelled beam profiles.

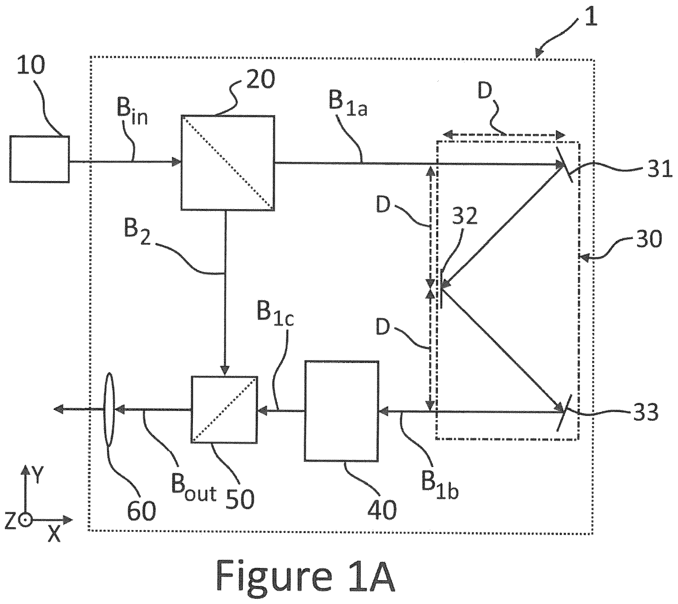

Figure 1A shows a schematic view of an optical converter 1. The optical converter 1 comprises a polarizing beam splitter 20, wherein the polarizing beam splitter 20 is configured to split an incident light beam $\mathbf{B_{in}}$ into two beams. Specifically, the polarizing beam splitter 20 is configured to split the incident light beam $\mathbf{B_{in}}$ into a first beam $\mathbf{B_1}$ having a first polarization state PS1 and a second beam $\mathbf{B_2}$ having a second polarization state PS2. The polarizing beam splitter 20 is configured to split the incident light beam $\mathbf{B_{in}}$ into the first beam $\mathbf{B_1}$ and the second beam $\mathbf{B_2}$ such that the first beam $\mathbf{B_1}$ is orthogonally polarized relative to the second beam $\mathbf{B_2}$. In the shown example, the first polarization state PS1 may correspond to a vertical linear polarization state and the second polarization state PS2 may correspond to a horizontal linear polarization state. The incident light beam $\mathbf{B_{in}}$ is generated by a light source 10. Preferably, the incident light beam $\mathbf{B_{in}}$ is an unpolarised light beam. In particular, the light source 10 is an end section of a multimode optical fibre having a D-shaped core, such that light exiting the multimode optical fibre and forming the incident light beam $\mathbf{B_{in}}$ has a substantially D-shaped incident light beam profile. Furthermore, the polarizing beam splitter 20 is configured to split the incident light beam $\mathbf{B_{in}}$ such that the first beam $\mathbf{B_1}$ is emitted from the polarizing beam polarizer 20 in a first emission direction and the second the second beam $\mathbf{B_2}$ is emitted from the polarizing beam polarizer 20 in a second emission direction, wherein the first emission direction is substantially orthogonal to the second emission direction.

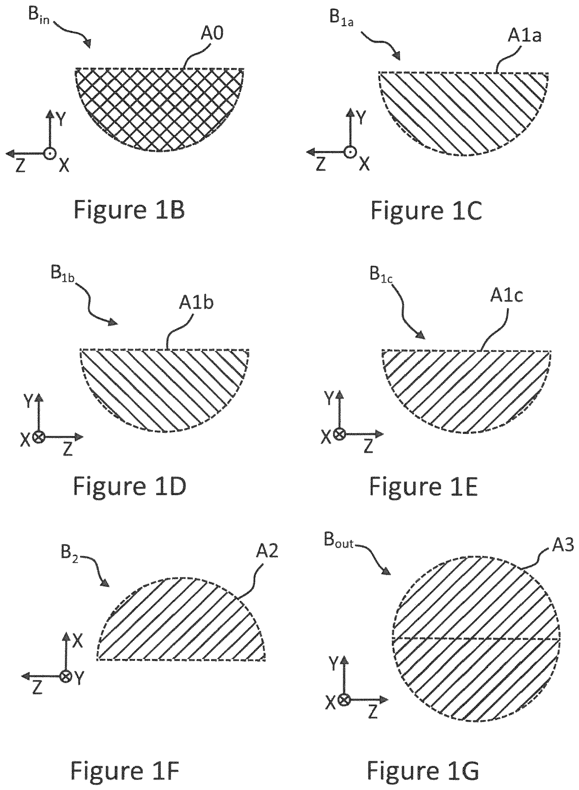

Furthermore, Figure 1A shows an exemplary 3D Cartesian coordinate system in which the optical converter 1 is located. The incident light beam $\mathbf{B_{in}}$ has a substantially D-shaped or semi-circular beam profile A0 along the beam path of the incident light beam $\mathbf{B_{in}}$ between the light source **10** and the polarizing beam splitter **20**. Said beam profile **A0** is illustrated in **Figure 1B,** wherein the exemplary coordinate system shown in Fig. 1B corresponds to the coordinate system of Fig. 1A to show the relative orientation of the beam profile **A0** and the optical converter **1**. The incident beam $\mathbf{B_{in}}$ has an initial polarization state, as indicated by the cross-hashed area of the beam profile **A0.**

The optical converter **1** comprises a beam profile adjustment unit **30** arranged along a beam path of the first beam $\mathbf{B_1}$ between the polarizing beam splitter **20** and the beam recombination unit **50**, wherein the beam profile adjustment unit **30** is configured to adjust the first beam profile $\mathbf{P_1}$ of the first beam $\mathbf{B_1}$ relative to an axis being parallel to a beam propagation direction of the first beam $\mathbf{B_1}$. In particular, the beam profile adjustment unit **30** is configured to adjust the first beam profile $\mathbf{P_1}$ by reflecting the first beam $\mathbf{B_1}$ thrice. Specifically, the first beam $\mathbf{B_1}$ has a substantially D-shaped or semi-circular beam profile **A1a** along the beam path of the first beam $\mathbf{B_1}$ between the polarizing beam splitter 20 and the beam profile adjustment unit **30** (labelled as $\mathbf{B_{1a}}$). Said beam profile **A1a** is illustrated in **Figure 1C,** wherein the exemplary coordinate system shown in Fig. 1C corresponds to the coordinate system of Fig. 1A to show the relative orientation of the beam profile **A1a** and the optical converter **1**. The first beam $\mathbf{B_{1a}}$ has the first polarization state **PS1,** as indicated by the descending-hashed area of the beam profile **A1a.**

In particular, the beam profile adjustment unit 30 comprises a first mirror 31 configured to reflect the first beam $\mathbf{B_1}$, a second mirror 32 configured to subsequently reflect the first beam $\mathbf{B_1}$ a second time, and a third mirror 33 configured to subsequently reflect the first beam $\mathbf{B_1}$ a third time. In particular, each of the first mirror **31,** the second mirror **32,** and the third mirror are substantially planar mirrors. The first mirror **31,** the second mirror **32,** and the third mirror **33** may comprise at least one high-reflection coating and/or at least one optical grating and/or at least one distributed Bragg reflector element.

The first beam $\mathbf{B_1}$ is incident on the first mirror **31** of the beam profile adjustment unit **30,** wherein the first mirror **31** is tilted with respect to the first beam $\mathbf{B_1}$ such that a propagation direction of the first beam $\mathbf{B_1}$ reflected by the first mirror **31** is aligned such that the first beam $\mathbf{B_1}$ reflected by the first mirror **31** is incident on the second mirror **32.** After reflection by the first mirror **31,** the first beam $\mathbf{B_1}$ is incident on the second mirror **32** of the beam profile adjustment unit **30,** wherein the second mirror **32** is tilted with respect to the first beam $\mathbf{B_1}$ such that a propagation direction of the first beam $\mathbf{B_1}$ reflected by the second mirror **32** is aligned such that the first beam $\mathbf{B_1}$ reflected by the second mirror **32** is incident on the third mirror **33.** After reflection by the second mirror **32,** the first beam $\mathbf{B_1}$ is incident on the third mirror **33** of the beam profile adjustment unit **30,** wherein the third mirror **33** is tilted with respect to the first beam $\mathbf{B_1}$ such that a propagation direction of the first beam $\mathbf{B_1}$ reflected by the third mirror **33** is aligned such that the first beam $\mathbf{B_1}$ reflected by the third mirror **33** is incident on a beam polarization converter **40,** as further described below.

The first mirror **31** is further configured such that the propagation direction of the first beam $\mathbf{B_1}$ incident on the first mirror **31** and a normal vector of the planar surface of the first mirror **31** are orthogonal to a straight edge of the D-shaped first profile $\mathbf{P_1}$ of the first beam $\mathbf{B_1}$. The second mirror **32** is configured such that the propagation direction of the first beam $\mathbf{B_1}$ incident on the second mirror **32** and a normal vector of the planar surface of the second mirror **32** are orthogonal to a straight edge of the D-shaped first profile $\mathbf{P_1}$ of the first beam $\mathbf{B_1}$. The third mirror **33** is configured such that the propagation direction of the first beam $\mathbf{B_1}$ incident on the third mirror **33** and the normal vector of the planar surface of the third mirror **33** are orthogonal to a straight edge of the D-shaped first profile $\mathbf{P_1}$ of the first beam $\mathbf{B_1}$.

Specifically, the first beam $\mathbf{B_1}$ has a substantially D-shaped or semi-circular beam profile **A1b** along the beam path of the first beam $\mathbf{B_1}$ between the beam profile adjustment unit **30** and the beam polarization converter **40** (labelled as $\mathbf{B_{1b}}$). Said beam profile **A1b** is illustrated in **Figure 1D,** wherein the exemplary coordinate system shown in Fig. 1D corresponds to the coordinate system of Fig. 1A to show the relative orientation of the beam profile **A1b** and the optical converter **1.** The first beam $\mathbf{B_{1b}}$ has the first polarization state **PS1,** as indicated by the descending-hashed area of the beam profile **A1b.**

The optical converter **1** further comprises the beam polarization converter **40** configured to convert the first polarization state **PS1** of the first beam **B$_1$** to the second polarization state **PS2**. For example, the beam polarization converter **40** may be configured to convert the first polarization state **PS1** of the first beam **B$_1$**, corresponding to a vertical linear polarization state, to the second polarization state **PS2,** corresponding to a horizontal linear polarization state. In particular, the beam polarization converter **40** is arranged along the beam path of the first beam **B$_1$** between the beam profile adjustment unit **30** and the beam recombination unit **50**. However, the arrangement of the beam polarization converter **40** is not limited to the position as illustrated for optical converter **1**. Instead, the beam polarisation converter **40** may alternatively or additionally at least partially be arranged between the polarizing beam splitter **20** and the first mirror **31** of the beam profile adjustment unit **30**, at least partially arranged between the first mirror **31** of the beam profile adjustment unit **30** and the second mirror **32** of the beam profile adjustment unit **30**, at least partially arranged between the second mirror **32** of the beam profile adjustment unit **30** and the third mirror **33** of the beam profile adjustment unit **30,** and/or may alternatively or additionally be at least partially arranged between the third mirror **33** of the beam profile adjustment unit **30** and the beam recombination unit **50**.

Specifically, the first beam **B$_1$** has a substantially D-shaped or semi-circular beam profile **A1c** along the beam path of the first beam **B$_1$** between the beam polarization converter **40** and the beam recombination unit **50** (labelled as **B$_{1c}$**). Said beam profile **A1c** is illustrated in **Figure 1E,** wherein the exemplary coordinate system shown in Fig. 1E corresponds to the coordinate system of Fig. 1A to show the relative orientation of the beam profile **A1c** and the optical converter **1**. The first beam **B$_{1c}$** has the second polarization state **PS2,** as indicated by the ascending-hashed area of the beam profile **A1c.**

The optical converter **1** further comprises the beam recombination unit **50** configured to combine the first beam **B$_1$** and the second beam **B$_2$** into a single output beam **B$_{out}$**, wherein the output beam **B$_{out}$** has an output beam profile **P$_{out}$** in a cross-sectional plane perpendicular to a propagation direction of the output beam **B$_{out}$** and wherein the beam recombination unit **50** is configured to align the first beam **B$_1$** and the second beam **B$_2$** such that the output beam profile **P$_{out}$** substantially corresponds to a beam profile of the first beam profile **P$_1$** being adjacent to the second beam profile **P$_2$**.

Specifically, the second beam **B$_2$** has a substantially D-shaped or semi-circular beam profile **A2** along the beam path of the second beam **B$_2$** between the polarizing beam splitter **20** and the beam recombination unit **50**. Said beam profile **A2** is illustrated in **Figure 1F,** wherein the exemplary coordinate system shown in Fig. 1F corresponds to the coordinate system of Fig. 1A to show the relative orientation of the beam profile **A2** and the optical converter **1**. The second beam **B$_2$** has the second polarization state **PS2,** as indicated by the ascending-hashed area of the beam profile **A2.**

In particular, the shapes of exemplary beam profiles **A0, A1a, A1b, A1c,** and **A2** are geometrically similar.

Both the second beam **B$_2$**, having the second beam profile **P$_2$** (illustrated as beam profile **A2** in Fig. 1F) and the second polarization state **PS2,** and the first beam **B$_1$**, having the first beam profile **P$_1$** (illustrated as beam profile **A1c** in Fig. 1E) and the second polarization state **PS2** are incident on the beam recombination unit **50**. Specifically, the output beam **B$_{out}$** has a substantially circular beam profile **A3** along the beam path of the output beam **B$_3$** between the beam recombination unit **50** and a lens assembly **60** (please see below). Said beam profile **A3** is illustrated in **Figure 1G,** wherein the exemplary coordinate system shown in Fig. 1G corresponds to the coordinate system of Fig. 1A to show the relative orientation of the beam profile **A3** and the optical converter **1**. The output beam **B$_{out}$** has the second polarization state **PS2,** as indicated by the ascending-hashed area of the beam profile **A3.**

In particular, the beam recombination unit **50** is configured to align the first beam **B$_1$** and the second beam **B$_2$** such that the beam profile **A3** substantially corresponds to the beam profile of the first beam **B$_1$** being adjacent to the beam profile of the second beam **B$_2$**. Specifically, said beam profile of the first beam **B$_1$** is aligned with the beam profile of the second beam **B$_2$** such that a straight edge of the beam profile of the first beam **B$_1$** is aligned along a straight edge of the beam profile of the second beam **B$_2$**. As both the first beam **B$_1$** and the second beam **B$_2$** incident on the beam recombination unit **50** have the second polarization state **PS2,** the output beam **B$_{out}$** has the second polarization state **PS2.**

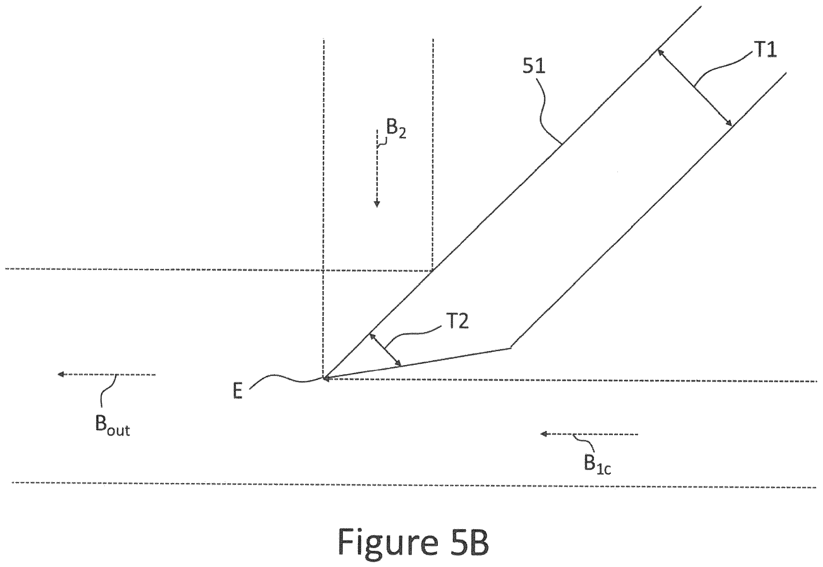

In particular, the beam recombination unit **50** comprises a mirror element **51** (please refer to Figure 5B), which is a scraper mirror, having a combination of the features as outlined above. The mirror element **51** and the polarizing beam splitter **20** are configured such that a straight edge of the D-shaped beam profile **A2** of the second beam **B$_2$**, as emitted from the polarizing beam splitter **20** and incident on the mirror element **51,** is aligned with an edge **E** of the mirror element **51,** wherein the mirror element **51** is configured to reflect the second beam **B$_2$**. Similarly, the mirror element **51** and the beam profile adjustment unit **30** are configured such that a straight edge of the D-shaped beam profile **A1c** of the first beam **B$_1$** is aligned with the edge **E** of the mirror element **51,** such that the first beam **B$_1$** is not reflected by the mirror element **51**. By aligning the first beam **B$_1$** and the second beam **B$_2$** in such a fashion, the beam recombination unit **50,** in particular the mirror element **51**, is able to combine the first beam **B$_1$** and the second beam **B$_2$** into a single output beam **B$_{out}$**, having beam profile **A3** and the second polarization state **PS2.**

The optical converter **1** may further comprise at least one lens assembly **60** configured to modify the focus of the output beam **B$_{out}$** being emitted from the beam recombination unit **50**. In particular, the lens assembly **60** may be configured to focus or defocus the output beam **B$_{out}$** onto a workpiece and/or a surface/object of interest. In particular, the lens assembly **60** may be configured to adjust a shape of the output beam profile **P$_{out}$** of the output beam **B$_{out}$**. The

lens assembly **60** may comprise at least one lens element.

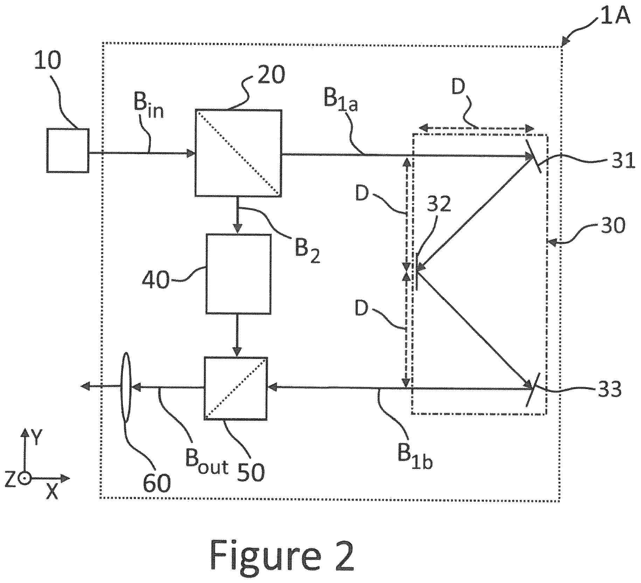

**Figure 2** shows an optical converter **1A,** wherein the beam polarization converter **40** is arranged along the beam path of the second beam **B$_2$**. Thereby, the second beam **B$_2$** emitted from the polarizing beam splitter **20** is incident on the beam polarization converter **40**. The beam polarization converter **40** is configured to convert the second polarization state **PS2** of the second beam **B$_2$** to the first polarization state **PS1**. The beam recombination unit **50** is configured to combine the first beam **B$_1$** having the first polarization state **PS1** and the second beam **B$_2$** having the first polarization state **PS1** into a single output beam **B$_{out}$** having the first polarization state **PS1**.

In particular, components marked with the same reference sign as in Figure 1A may be implemented in an identical fashion.

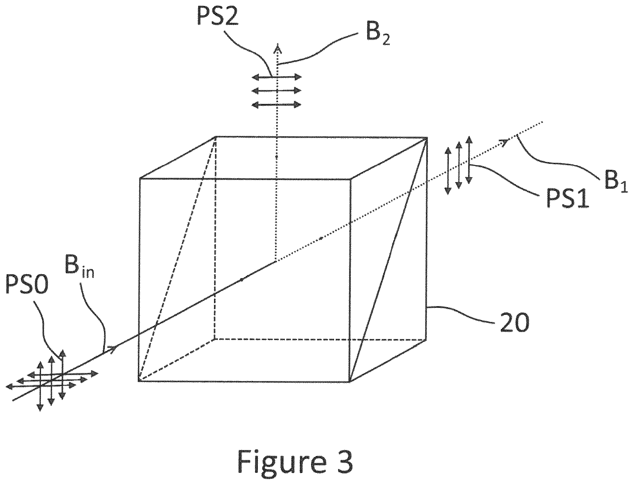

**Figure 3** shows a schematic illustration of a polarizing beam splitter **20**. The polarizing beam splitter **20** is configured to split the incident light beam **B$_{in}$** into two beams. In particular, the incident light beam **B$_{in}$** may be split by refraction, reflection and/or internal interference by the polarizing beam splitter **20**. Specifically, the polarizing beam splitter **20** is configured to split the incident light beam **B$_{in}$** having an incident polarization state **PS0** into the first beam **B$_1$** having a first polarization state **PS1** and the second beam **B$_2$** having a second polarization state **PS2**. As shown in Figure 3, the polarizing beam splitter **20** may be configured to split the incident light beam **B$_{in}$** into the first beam **B$_1$** and the second beam **B$_2$** such that the first beam **B$_1$** is orthogonally polarized relative to the second beam **B$_2$**. Therefore, the first beam **B$_1$** and the second beam **B$_2$** may be linearly orthogonally polarized, such as for example the first beam **B$_1$** being vertically linearly polarized and the second beam **B$_2$** being horizontally linearly polarized. Please note that for illustration purposes an angle between the propagation direction of the first beam **B$_1$** and the propagation direction of the second beam **B$_2$** has been set to 90°. However, this is not essential, and the polarizing beam splitter **20** may split the incident beam **B$_{in}$** into a first beam **B$_1$** and a second beam **B$_2$** at any non-zero angle.

The polarizing beam splitter **20** is shown in Figure 3 as a birefringent polarizer. Such a polarizing beam splitter **20** exploits the birefringent properties of, for example, crystals such as quartz and calcite. An unpolarized incident light beam **B$_{in}$** is split by refraction into two beams, wherein each of the two beams experiences different refraction indices. In particular, the polarizing beam splitter **20** may be a Nicol prism, a Glan-Thompson prism, a Glan-Foucault prism, a Glan-Taylor prism, a Wollaston prism, a Rochon prism, a Sénarmont prism, or a Nomarski prism.

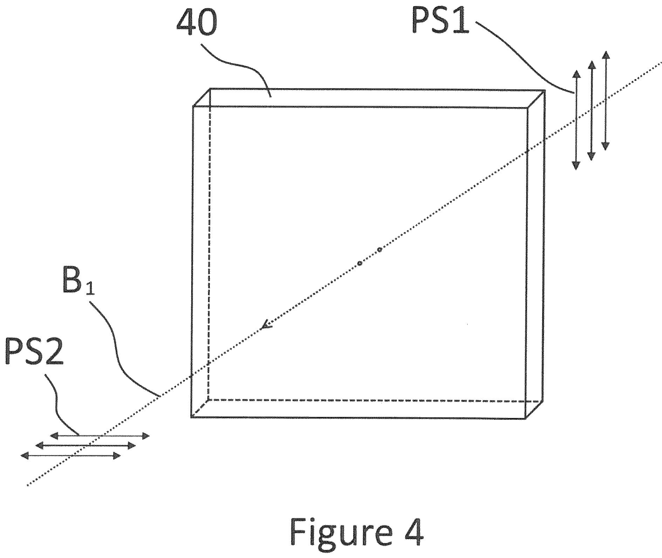

**Figure 4** shows a schematic illustration of a beam polarization converter **40**. The beam polarization converter **40** is configured to convert the first polarization state **PS1** of the first beam **B$_1$** to the second polarization state **PS2**. In particular, the beam polarization converter **40** may be configured such that the first beam **B$_1$** being transmitted through said beam polarization converter **40** experiences only a minimal loss of degree of polarization, wherein said loss of degree of polarization does not exceed a maximum of 0.2, preferably does not exceed a maximum of 0.1, further preferably does not exceed a maximum of 0.05, most preferably does not exceed a maximum of 0.01.

The beam polarization converter **40** may be at least partially arranged along a beam path of the first beam **B$_1$** between the polarizing beam splitter **20** and the beam recombination unit **50**. In particular, the beam path of the first beam **B$_1$** corresponds to a route of first beam **B$_1$** taken within the optical converter **1.** While the first beam **B$_1$** is illustrated as perpendicularly impacting the surface of the beam polarization converter **40,** other impact angles may be possible.

The exemplary beam polarization converter **40** as shown in Figure 4 is a waveplate, specifically a half-wave plate. The waveplate is a transparent optical device, constructed for example from a birefringent material, and configured to alter the polarization state **PS1** of the first beam **B$_1$** propagating through said waveplate by introducing a phase shift between two perpendicular polarization components of the first beam **B$_1$.** However, the beam polarization converter **40** is not limited to such a half-wave plate. Instead, the beam polarization converter may comprise at least two waveplates serially arranged along the beam path of the first beam **B$_1$**, such as two quarter-wave plates.

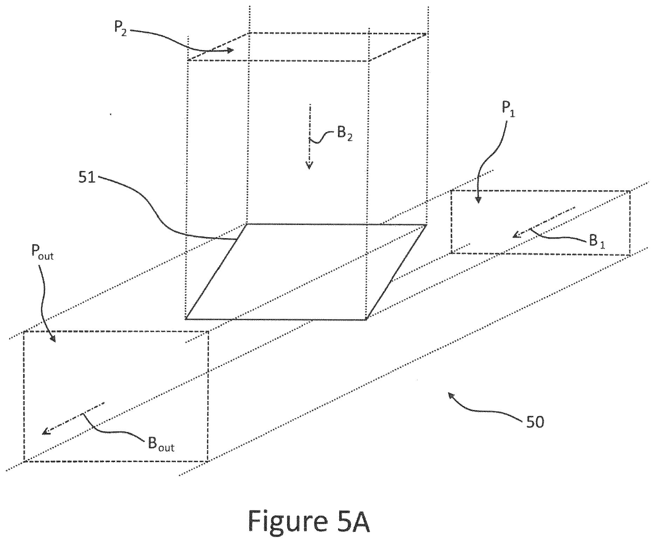

**Figure 5A** shows a schematic illustration of a beam recombination unit **50**. The beam recombination unit **50** is configured to combine the first beam **B$_1$** having a first beam profile **P$_1$** and the second beam **B$_2$** having a second beam profile **P$_2$** into a single output beam **B$_{out}$**, wherein the output beam **B$_{out}$** has an output beam profile **P$_{out}$** in a cross-sectional plane perpendicular to a propagation direction of the output beam **B$_{out}$** and wherein the beam recombination unit **50** is configured to align the first beam **B$_1$** and the second beam **B$_2$** such that the output beam profile **P$_{out}$** substantially corresponds to a beam profile of the first beam profile **P$_1$** being adjacent to the second beam profile **P$_2$**. In particular, the beam recombination unit **50** is configured such that the first beam **B$_1$** and the second beam **B$_2$** are aligned to form a single output beam **B$_{out}$**, wherein the shape of the output beam profile **P$_{out}$** corresponds to a combined shape of the first beam profile **P$_1$** and the shape of the second beam profile **P$_2$**, wherein the shape of the output beam profile **P$_{out}$** forms a connected space. The term connected space is meant to be understood in the mathematical sense, wherein the shape of the output beam profile **P$_{out}$** is a space that cannot be represented as the union of two or more disjoint, non-empty open subsets/sub-shapes. In particular, the area of the output beam profile **P$_{out}$** corresponds to an area twice the size of an area of the first beam profile **P$_1$** and the output beam profile **P$_{out}$** corresponds to an area twice the size of an area of the second beam profile **P$_2$**. The beam recombination unit **50** is further configured to combine the first beam **B$_1$** and the second beam **B$_2$** such that the first beam profile **P$_1$** and the second profile **P$_2$** are aligned along a shared edge in the cross-sectional plane perpendicular to a propagation direction of the output beam **B$_{out}$**.

The beam recombination unit **50** comprises one mirror element **51,** wherein the mirror element **51** is configured to reflect the second beam **B$_2$** and allow the first beam **B$_1$** to pass to recombine the first beam **B$_1$** and the second beam **B$_2$** to form the single output beam **B$_{out}$**. The mirror element **51** is shown herein as a two-dimensional plane for illustration purposes, but it is understood, that the mirror element **51** is a three-dimensional object, and may, for example be configured as a plate-like mirror element **51.** The mirror element **51** has a surface area configured to reflect electromagnetic radiation. The second beam **B$_2$** to be reflected by the mirror element **51** may impact on the mirror element **51** in a reflection area of the mirror element **51.** While the first beam profile **P$_1$** and the second beam profile **P$_2$** are shown to be substantially rectangular in Figure 5A, any beam profile geometry, such as D-shaped beam profile shapes, are possible. Furthermore, while the mirror element **51** is shown to be substantially rectangular, any shape of the mirror element **51** is possible.

**Figure 5B** shows a cross-sectional view of a beam recombination unit **50.** The beam recombination unit **50** is configured to combine the first beam **B$_1$** and the second beam **B$_2$** into a single output beam **B$_{out}$**, wherein the output beam **B$_{out}$**. The first beam **B$_1$** may for example have a beam profile **A1c** (see Fig. 1E) and the second polarization state **PS2**. The second beam **B$_2$** may for example have a beam profile **A2** (see Fig. 1F) and the second polarization state **PS2**. The beam recombination unit **50** is configured to combine the first beam **B$_1$** and the second beam **B$_2$** such that the output beam **B$_{out}$** has a beam profile **A3** (see Fig. 1G) substantially corresponding to the beam profile **A1c** of the first beam **B$_1$** being adjacent to the beam profile **A2** of the second beam **B$_2$**. In particular, the beam recombination unit **50** comprises a mirror element **51,** which may be implemented as a scraper mirror, having a combination of the features as outlined above. The mirror element **51** is configured such that the beam profile **A2** of the second beam **B$_2$**, incident on the mirror element **51,** is aligned with an edge **E** on one side of the mirror element **51.** In particular, the mirror element **51** is configured such that the straight edge of the beam profile **A2** of the second beam **B$_2$**, incident on the mirror element **51,** is aligned with the edge **E** on one side of the mirror element **51.** Similarly, the mirror element **51** is configured such that the beam profile **A1c** of the first beam **B$_1$**, passing the mirror element **51,** is aligned with the edge **E** on another side of the mirror element **51.** In particular, the mirror element **51** is configured such that the straight edge of the beam profile **A1c** of the first beam **B$_1$**, passing the mirror element **51,** is aligned with the edge **E** on the other side of the mirror element **51.** By aligning the first beam **B$_1$** and the second beam **B$_2$** in such a fashion, the beam recombination unit **50,** in particular the mirror element **51,** is able to combine the first beam **B$_1$** and the second beam **B$_2$** into a single output beam **B$_{out}$**, having a beam profile **A3** and the second polarization state **PS2**.

The mirror element **51** has a thickness, wherein said thickness is measured perpendicular to a surface area and/or a reflection area, as described above, of the mirror element **51.** In particular, the mirror element **51** may have a first thickness **T1,** which is substantially constant across at least one part of the mirror element **51.** The mirror element **51** may have a second thickness **T2,** which increases continuously, in particular linearly, from the edge **E** in a direction perpendicular to said edge **E** and along the mirror element **51.** The second thickness **T2** is smaller or equal to the first thickness **T1.** In particular, the mirror element **51** is configured such that no part of the mirror element blocks the first beam **8$_1$.**

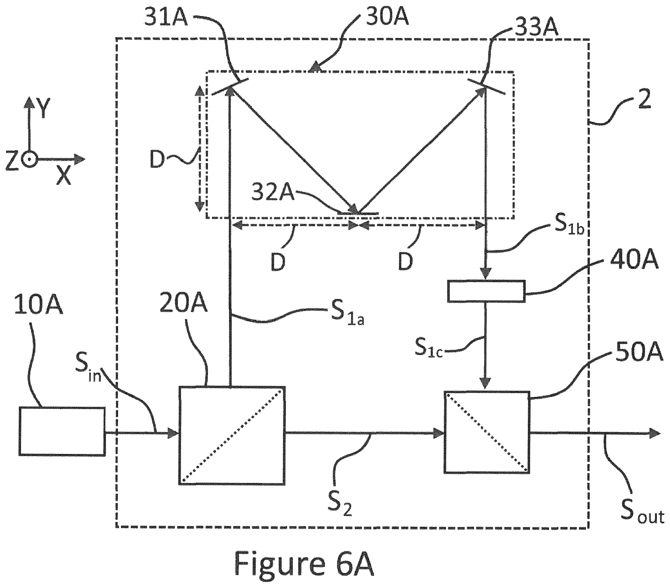

**Figure 6A** shows a schematic illustration of an optical coupler **2** for generating a light beam **S$_{out}$** having a predetermined light beam profile in a plane perpendicular to a propagation direction of the light beam **S$_{out}$**. A source light beam **S$_{in}$** is generated by a light source **10A** and is transmitted to a beam splitter **20A.**

The beam splitter **20A** is configured to split the source light beam **S$_{in}$** from the light source **10A** into a first source beam **S$_1$** and a second source beam **S$_2$**, wherein the first source beam **S$_1$** has a first source profile in a plane perpendicular to a propagation direction of the first source beam **S$_1$** that is substantially identical to a second source profile of the second source beam **S$_2$**, wherein the first source profile is substantially identical to the predetermined light beam profile. The source light beam **S$_{in}$** has a source light beam profile in a cross-sectional plane perpendicular to a propagation direction of the source light beam **S$_{in}$**, and the beam splitter **20A** is configured to split the source light beam **S$_{in}$** into the first source beam **S$_1$** and the second source beam **S$_2$** such that the source light beam profile substantially corresponds to a beam profile of the first source beam profile being adjacent to the second source beam profile. In particular, the beam splitter **20A** may be designed similarly to the beam recombination unit **50** of the optical converter **1, 1A** as outlined above, wherein the beam directions are reversed.

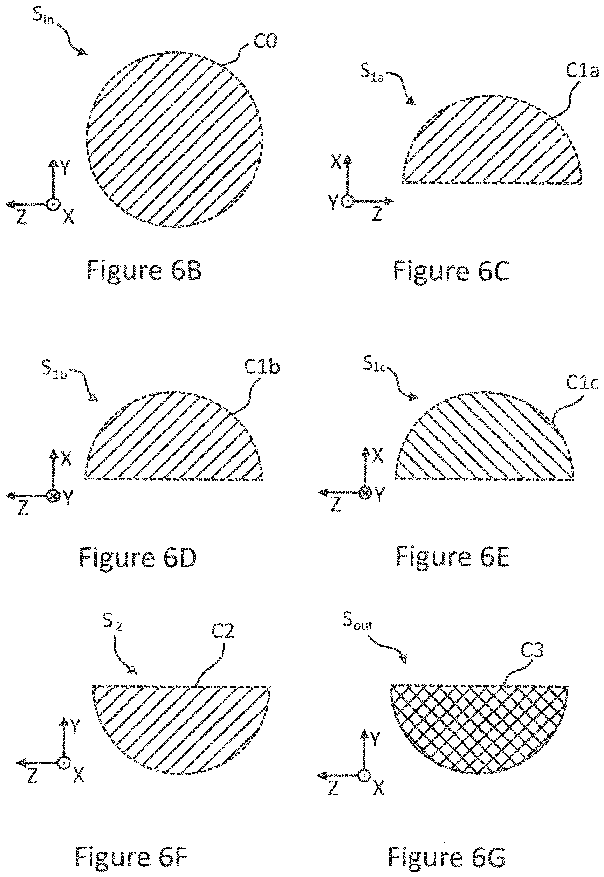

Furthermore, Figure 6A shows an exemplary 3D Cartesian coordinate system in which the optical coupler **2** is located. Specifically, the source light beam **S$_{in}$** has a substantially circular or elliptical beam profile **C0** along the beam path of the source light beam **S$_{in}$** between the light source **10A** and the beam splitter **20A.** Said beam profile **C0** is illustrated in **Figure 6B,** wherein the exemplary coordinate system shown in Fig. 6B corresponds to the coordinate system of Fig. 6A to show the relative orientation of the beam profile **C0** and the optical coupler **2.** The source light beam **S$_{in}$** may have the second polarization state **PS2** (e.g. a horizontal linear polarization state), as indicated by the ascending-hashed area of the beam profile **C0,** wherein the source light beam **S$_{in}$** may have a degree of polarization, as defined in equation (1) above, of at least 0.8, preferably at least 0.9.

The optical coupler **2** further comprises a beam profile adjustment unit **30A,** wherein the beam profile adjustment unit **30A** is configured to adjust the first source profile of the first source beam **S$_1$**, for example by rotation and/or reflection relative to a beam propagation direction of the first source beam $S_1$. In particular, the beam profile adjustment unit **30A** is arranged along a beam path of the first source beam $S_1$ between the beam splitter **20A** and a beam recombination unit **50A**. In particular, the beam profile adjustment unit **30A** is configured to adjust the first source profile by reflecting the first source beam $S_1$ thrice. The beam profile adjustment unit **30A** comprises a first mirror **31A** configured to reflect the first source beam $S_1$, a second mirror **32A** configured to subsequently reflect the first source beam $S_1$ a second time, and a third mirror **33A** configured to subsequently reflect the first source beam $S_1$ a third time. In particular, the beam profile adjustment unit **30A** of the optical coupler **2** may be designed similarly to the beam profile adjustment unit **30** of the optical converter **1, 1A,** as outlined above.

Specifically, the first source beam $S_1$ has a substantially D-shaped or semi-circular beam profile **C1a** along the beam path of the first source beam $S_1$ between the beam splitter **20A** and the beam profile adjustment unit **30A** (labelled as $S_{1a}$ in Fig. 6A). Said beam profile **C1a** is illustrated in **Figure 6C,** wherein the exemplary coordinate system shown in Fig. 6C corresponds to the coordinate system of Fig. 6A to show the relative orientation of the beam profile **C1a** and the optical coupler **2.** The first source beam $S_1$ may have the second polarization state **PS2,** as indicated by the ascending-hashed area of the beam profile **C1a.**

The optical coupler **2** further comprises a beam polarization converter **40A,** wherein the beam polarization converter **40A** is configured to convert at least a first initial polarization state, such as the second polarization state **PS2,** of the first source beam $S_1$ such that the first source beam $S_1$ has a first converted polarization state, such as the first polarization state **PS1,** wherein the first initial polarization state is different from the first converted polarization state. The beam polarization converter **40A** is arranged along a beam path of the first source beam $S_1$ between the beam splitter **20A** and the beam recombination unit **50A,** in particular between the beam profile adjustment unit **30A** and the beam recombination unit **50A.** However, the optical coupler **2** is not limited to such an arrangement, and the beam polarization converter **40A** may alternatively or additionally be at least partially arranged between the beam splitter **20A** and the beam profile adjustment unit **30A** and/or the beam polarization converter **40A** may alternatively or additionally be at least partially arranged within the beam profile adjustment unit **30A,** in particular between at least two of the first mirror **31A,** the second mirror **32A,** and the third mirror **33A.** The beam polarization converter **40A** of the optical coupler **2** may be designed similarly to the beam polarization converter **40** of the optical converter **1, 1A,** as outlined above.

Specifically, the first source beam $S_1$ has a substantially D-shaped or semi-circular beam profile **C1b** along the beam path of the first source beam $S_1$ between the beam profile adjustment unit **30A** and the beam polarization converter **40A** (labelled as $S_{1b}$ in Fig. 6A). Said beam profile **C1b** is illustrated in **Figure 6D,** wherein the exemplary coordinate system shown in Fig. 6D corresponds to the coordinate system of Fig. 6A to show the relative orientation of the beam profile **C1b** and the optical coupler **2.** The first source beam $S_1$ may have the second polarization state **PS2,** as indicated by the ascending-hashed area of the beam profile **C1b.**

The optical coupler **2** further comprises a beam recombination unit **50A,** wherein the beam recombination unit **50A** is configured to combine the first source beam $S_1$ and the second source beam $S_2$ into a single light beam $S_{out}$ having the predetermined light beam profile. In particular, the first source beam $S_1$ and the second source beam $S_2$ may be combined by refraction, reflection and/or internal interference by the beam recombination unit **50A.**

Specifically, the first source beam $S_1$ has a substantially D-shaped or semi-circular beam profile **C1c** along the beam path of the first source beam $S_1$ between the beam polarization converter **40A** and the beam recombination unit **50A** (labelled as $S_{1c}$ in Fig. 6A). Said beam profile **C1c** is illustrated in **Figure 6E,** wherein the exemplary coordinate system shown in Fig. 6E corresponds to the coordinate system of Fig. 6A to show the relative orientation of the beam profile **C1c** and the optical coupler **2.** The first source beam $S_1$ may have the first polarization state **PS1,** as indicated by the descending-hashed area of the beam profile **C1c.**

Specifically, the second source beam $S_2$ has a substantially D-shaped or semi-circular beam profile **C2** along the beam path of the second source beam $S_2$ between beam splitter **20A** and the beam recombination unit **50A.** Said beam profile **C2** is illustrated in **Figure 6F,** wherein the exemplary coordinate system shown in Fig. 6F corresponds to the coordinate system of Fig. 6A to show the relative orientation of the beam profile **C2** and the optical coupler **2.** The second source beam $S_2$ may have the second polarization state **PS2,** as indicated by the ascending-hashed area of the beam profile **C2.**

Specifically, the beam recombination unit **50A** may be configured to combine the first source beam $S_1$ and the second source beam $S_2$ into the single light beam $S_{out}$ having a substantially unpolarized polarization state. In particular, a substantially unpolarized polarization state may be a polarization state having a degree of polarization, as defined in equation (1) above, of at most 0.6, preferably at most 0.3. In particular, the beam recombination unit **50A** of the optical coupler **2** may be designed similarly to the beam polarization converter **50** of the optical converter **1, 1A,** as outlined above, wherein the beam directions are reversed.

Specifically, the single light beam $S_{out}$ has a substantially D-shaped or semi-circular beam profile **C3** along the beam path of the single light beam $S_{out}$ after being emitted from the beam recombination unit **50A.** Said beam profile **C3** is illustrated in **Figure 6G,** wherein the exemplary coordinate system shown in Fig. 6F corresponds to the coordinate system of Fig. 6A to show the relative orientation of the beam profile **C3** and the optical coupler **2.** The single light beam

$S_{out}$ may be substantially unpolarized, as indicated by the cross-hashed area of the beam profile **C3**.

In particular, the beam recombination unit **50A** is configured to align the first source beam $S_1$ and the second source beam $S_2$ such that the beam profile **C3** substantially corresponds to the beam profile of the first source beam $S_1$ being superimposed onto the beam profile **C2** of the second source beam $S_2$. Specifically, the beam profile of the first source beam $S_1$ is aligned with the beam profile **C2** such that a straight edge of the beam profile of the first source beam $S_1$ is aligned along a straight edge of the beam profile **C2**, and such that the beam profile of the first source beam $S_1$ and the beam profile **C2** fully overlap to form the beam profile **C3**. As the first source beam $S_1$ and the second source beam $S_2$ incident on the beam recombination unit **50A** have orthogonally polarization states relative to one another, the single light beam $S_{out}$ has a polarization state corresponding to a superposition of the second polarization state **PS2** of the second source beam $S_2$ and the first polarization state **PS1** of the first source beam $S_1$.

In particular, the shapes of exemplary beam profiles **C1a, C1b, C1c, C2,** and **C3** are geometrically similar.

In particular, by implementing an optical coupler **2,** such as shown in Figure 6A and/or as described above, it is possible to convert a preferably polarized light beam from a light source **10A** into a single light beam $S_{out}$ having a predetermined light beam profile. Furthermore, a multimode optical fiber (not shown) may be optically coupled to the beam recombination unit **50A,** such that the single output beam $S_{out}$ can be transmitted over the multimode optical fiber from the beam recombination unit 50A. In particular, the multimode optical fiber may have a cross-section being substantially identical to the beam profile **C3** of the single output beam $S_{out}$. Therefore, by using such an optical coupler **2,** it is possible to couple the light beam from a light source **10A** into a multimode optical fibre having a cross-section being substantially identical to said predetermined beam profile. This allows the light beam generated by the light source **10A** to be coupled into said multimode optical fibre by the optical coupler **2,** to transmit said light beam via said multimode optical fibre to an optical converter **1,** as outlined above, and to generate an output beam $B_{out}$ of polarized light using the optical converter **1** without a significant loss of intensity and/or brilliance.

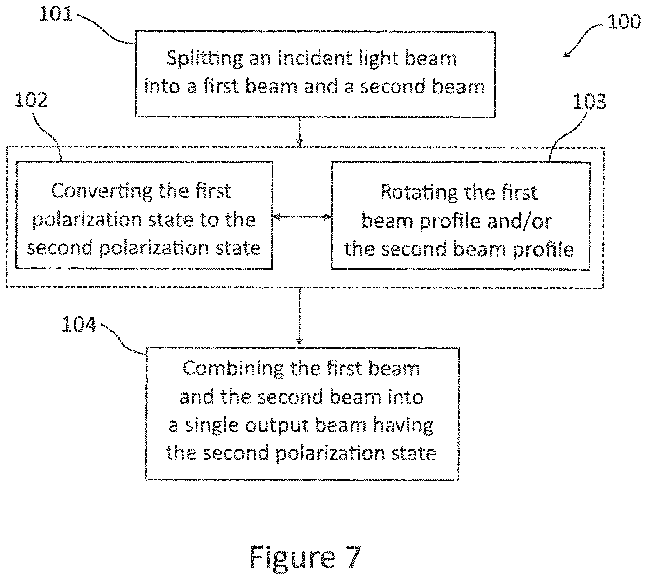

**Figure 7** shows a flow diagram of an exemplary method **100** of generating polarized radiation comprising at step **101** a splitting of an incident light beam $B_{in}$ into a first beam $B_1$ and a second beam $B_2$, wherein the first beam $B_1$ has a first beam profile $P_1$ in a cross-sectional plane perpendicular to a propagation direction of the first beam $B_1$, and the second beam $B_2$ has a second beam profile $P_2$ in a cross-sectional plane perpendicular to a propagation direction of the second beam $B_2$, the first beam $B_1$ having a first polarization state **PS1** and the second beam $B_2$ having a second polarization state **PS2** being different from the first polarization state **PS1**.

The method **100** further comprises at step **102** a converting of the first polarization state **PS1** of the first beam $B_1$ to the second polarization state **PS2**. The method **100** further comprises at step **103** an adjusting of the first beam profile $P_1$ of the first beam $B_1$, for example by reflection and/or rotation, such as a rotation around a rotation axis being parallel to a beam propagation direction of the first beam $B_1$ and/or an adjusting of the second beam profile $P_2$ of the second beam $B_2$, for example by reflection and/or rotation, such as a rotation around a rotation axis being parallel to a beam propagation direction of the second beam $B_2$. In particular, the adjusting of the first beam profile $P_1$ and/or the adjusting of the second beam profile $P_2$ may include at least once reflecting the first beam $B_1$ and/or the second beam $B_2$, respectively. In particular, step **102** may be undertaken before step **103,** step **102** may be undertaken during step **103** or vice versa, or step **102** may be undertaken after step **103.**

The method **100** further comprises at step **104** a combining of the first beam $B_1$ and the second beam $B_2$ into a single output beam $B_{out}$ having the second polarization state **PS2,** wherein the output beam $B_{out}$ has an output beam profile $P_{out}$ in a cross-sectional plane perpendicular to a propagation direction of the output beam $B_{out}$ and wherein the combining comprises aligning the first beam $B_1$ and the second beam $B_2$ such that the output beam profile $P_{out}$ substantially corresponds to a beam profile of the first beam profile $P_1$ being adjacent to the second beam profile $P_2$.

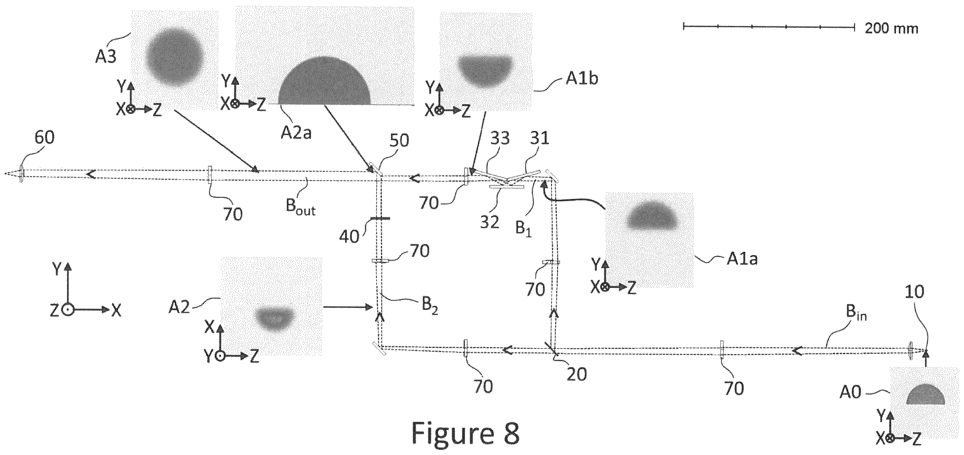

**Figure 8** shows a schematic view of an optical converter **1,** wherein the beam profiles of the incident beam $B_{in}$, the first beam $B_1$, the second beam $B_2$, and the output beam $B_{out}$ have been mathematically modelled. In addition, Figure 8 shows an exemplary 3D Cartesian coordinate reference system in which the optical converter **1** is located. Said modelled beam profiles are shown in Figure 7 at appropriate locations along the respective beam paths. For elements marked with previously discussed reference signs, please refer to the above description. In particular, each illustration of a modelled beam profile, labelled as **A0, A1a, A1b, A2, A2a,** and **A3,** is provided with a coordinate system corresponding to the coordinate reference system in which the optical converter **1** is located, in order to indicate the relative orientation of each beam profile with respect to the optical converter **1.** In particular, beam profile **A2a** shows the beam profile of the second beam $B_2$ incident on the beam recombination unit **50.**

Figure 8 furthermore shows a plurality of lens elements **70,** which are located along beam paths of the incident beam $B_{in}$, the first beam $B_1$, the second beam $B_2$, and the output beam $B_{out}$ and are configured to focus the respective beam onto the subsequent optical element along the respective beam path. For example, the incident beam $B_{in}$ is focused by a lens element **70** onto the polarizing beam splitter **20.** By implementing one or more of such lens elements **70,** the focus of the respective beam may be controlled to prevent any possible divergence of said beam.

The invention is not limited to the combination of features of the illustrative embodiments described in the description and the figures. In particular, the invention may be implemented by using any combination of any of the features described in the description and the figures, as long as they fall within the scope of the appended claims.

**List of Reference Numerals**

| | |
|---|---|
| 1, 1A | Optical converter |
| 2 | Optical coupler |
| 10, 10A | Light source |
| 20 | Polarizing beam splitter |
| 20A | Beam splitter |
| 30, 30A | Beam profile adjustment unit |
| 31, 31A | First mirror |
| 32, 32A | Second mirror |
| 33, 33A | Third mirror |
| 40, 40A | Beam polarization converter |
| 50, 50A | Beam recombination unit |
| 51 | Mirror element |
| E | Edge |
| T1, T2 | Thickness |
| 60 | Lens assembly |
| 70 | Lens element |
| $B_{in}$ | incident light beam |
| $B_1$, $B_{1a}$, $B_{1b}$, $B_{1c}$ | First beam |
| $B_2$ | Second beam |
| $B_{out}$ | Output beam |
| PS0 | Incident polarization state |
| PS1 | First polarization state |
| PS2 | Second polarization state |
| $P_1$ | First beam profile |
| $P_2$ | Second beam profile |
| $P_{out}$ | Output beam profile |
| A0, A1a, A1b, A1c, A2, A3 | Beam profile |
| C0, C1a, C1b, C1c, C2, C3 | Beam profile |
| $S_{in}$ | Source light beam |
| $S_1$, $S_{1a}$, $S_{1b}$, $S_{1c}$ | First source beam |
| $S_2$ | Second source beam |
| $S_{out}$ | Single light beam having a predetermined beam profile |
| 100 | Method |
| 101, 102, 103, 104 | Steps |

**Claims**

1.  An optical device for generating polarized radiation, comprising:

    a light source (10, 10A) being configured to generate a source light beam ($S_{in}$);
    an optical coupler (2) configured to generate a single light beam ($S_{out}$) having a predetermined light beam profile from the source light beam (Sin), the optical coupler (2) comprising:

    a beam splitter (20A), wherein the beam splitter (20A) is configured to split the source light beam ($S_{in}$) from the light source (10, 10A) into a first source beam ($S_1$) and a second source beam ($S_2$),
    wherein the first source beam ($S_1$) has a first source profile in a plane perpendicular to a propagation direction of the first source beam ($S_1$) that is substantially identical to a second source profile of the second source beam ($S_2$), wherein the first source profile is substantially identical to the predetermined light beam profile,
    a first beam profile adjustment unit (30A), wherein the first beam profile adjustment unit (30A) is configured to rotate the first source profile of the first source beam ($S_1$) relative to a beam propagation direction of the

first source beam ($S_1$) and/or to rotate the second source profile of the second source beam ($S_2$) relative to a beam propagation direction of the second source beam ($S_2$), and

a first beam recombination unit (50A), wherein the first beam recombination unit (50A) is configured to combine the first source beam ($S_1$) and the second source beam ($S_2$) into the single light beam ($S_{out}$) having the predetermined light beam profile;

an optical guide being configured to transmit the single light beam ($S_{out}$) having the predetermined light beam profile, wherein the optical guide is a multi-mode optical fibre having a cross-section being substantially identical to the predetermined light beam profile; and

an optical converter (1, 1A) configured to generate a single output beam ($B_{out}$) from the transmitted single light beam ($S_{out}$) having the predetermined light beam profile, the optical converter (1, 1A) comprising:

a polarizing beam splitter (20) being configured to split an incident light beam ($B_{in}$) into a first beam ($B_1$) and a second beam ($B_2$), wherein the incident light beam ($B_{in}$) is the transmitted single light beam ($S_{out}$), wherein the first beam ($B_1$) has a first beam profile ($P_1$) in a cross-sectional plane perpendicular to a propagation direction of the first beam ($B_1$), wherein the second beam ($B_2$) has a second beam profile ($P_2$) in a cross-sectional plane perpendicular to a propagation direction of the second beam ($B_2$), wherein the first beam ($B_1$) has a first polarization state (PS1) and the second beam ($B_2$) has a second polarization state (PS2) being different from the first polarization state (PS1),

a second beam recombination unit (50) being configured to combine the first beam ($B_1$) and the second beam ($B_2$) into the single output beam ($B_{out}$) having a final polarization state, wherein the output beam ($B_{out}$) has an output beam profile ($P_{out}$) in a cross-sectional plane perpendicular to a propagation direction of the output beam ($B_{out}$) and wherein the second beam recombination unit (50) is configured to align the first beam ($B_1$) and the second beam ($B_2$) such that the output beam profile ($P_{out}$) substantially corresponds to a beam profile of the first beam profile ($P_1$) being adjacent to the second beam profile ($P_2$), and

a first beam polarization converter (40) being configured to either:

- convert either the first polarization state (PS1) of the first beam ($B_1$) to the second polarization state (PS2) or the second polarization state (PS2) of the second beam ($B_2$) to the first polarization state (PS1), such that the output beam has a final polarization state corresponding to either the second polarization state (PS2) or the first polarization state (PS1), respectively, or

- convert the first polarization state (PS1) of the first beam ($B_1$) and the second polarization state (PS2) of the second beam ($B_2$) to a third polarization state different from the first polarization state (PS1) and the second polarization state (PS2), such that the output beam ($B_{out}$) has a final polarization state corresponding to the third polarization state.

2. The optical device according to claim 1, wherein the cross-section of the multi-mode optical fibre is semi-circular, semi-elliptical, or D-shaped.

3. The optical device according to one of the preceding claims, wherein the incident light beam (Bin) has an incident light beam profile in a cross-sectional plane perpendicular to a propagation direction of the incident light beam ($B_{in}$), and, optionally, wherein the incident light beam profile, the first beam profile ($P_1$) and the second beam profile ($P_2$) have a semi-circular or semi-elliptical shape, and wherein the output beam profile ($P_{out}$) has a substantially circular or elliptical shape.

4. The optical device according to one of the preceding claims, wherein the first beam profile ($P_1$) has a shape substantially identical to a shape of the second beam profile ($P_2$); and/or wherein at least one of the first beam profile ($P_1$) and the second beam profile ($P_2$) has a shape substantially identical to a shape of the incident light beam profile.

5. The optical device according to one of the preceding claims, wherein the second beam recombination unit (50) is configured to combine the first beam ($B_1$) and the second beam ($B_2$) such that the first beam profile ($P_1$) and the second profile are aligned along a shared edge in the cross-sectional plane perpendicular to a propagation direction of the output beam ($B_{out}$).

6. The optical device according to one of the preceding claims, wherein a second beam profile adjustment unit (30) is arranged along a beam path of the first beam ($B_1$) and/or a beam path of the second beam ($B_2$) between the polarizing beam splitter (20) and the second beam recombination unit (50),

> wherein the second beam profile adjustment unit (30) is configured to rotate the first beam profile ($P_1$) of the first beam ($B_1$) around a rotation axis being parallel to a beam propagation direction of the first beam ($B_1$) and/or to rotate the second beam profile ($P_2$) of the second beam ($B_2$) around a rotation axis being parallel to a beam propagation direction of the second beam ($B_2$), respectively, and, optionally,
> wherein the second beam profile adjustment unit (30) is configured to rotate the first beam profile ($P_1$) of the first beam ($B_1$) by an angle of 180 degrees.

7. The optical device according to claim 6, wherein the second beam profile adjustment unit (30) comprises at least one mirror (31, 31A, 32, 32A) configured to reflect the first beam ($B_1$) or the second beam ($B_2$), respectively, and, optionally,
wherein the at least one mirror (31, 31A, 32, 32A) comprises at least one high-reflection coating and/or at least one optical grating and/or at least one distributed Bragg reflector element.

8. The optical device according to one of the preceding claims, wherein the first beam polarization converter (40) is at least partially arranged along a beam path of the first beam ($B_1$) and/or the second beam ($B_2$) between the polarizing beam splitter (20) and the second beam recombination unit (50); and/or
wherein the second beam recombination unit (50) comprises at least one mirror element (51), wherein the at least one mirror element (51) is configured to reflect one of the first beam ($B_1$) and the second beam ($B_2$) and allow the other one of the first beam ($B_1$) and the second beam ($B_2$) to pass to recombine the first and second beams ($B_1$, $B_2$) to form the single output beam ($B_{out}$).

9. The optical device according to one of the preceding claims, wherein the optical converter (1, 1A) further comprises a cooling device, wherein the cooling device is thermally coupled to at least one of the polarizing beam splitter (20), the first beam polarization converter (40) and/or the second beam recombination unit (50), and, optionally,
wherein the cooling device comprises at least one passive cooling element, preferably a heat sink, and/or at least one active cooling element, preferably a thermoelectric element, and/or at least one fluid cooling element.

10. The optical device according to one of the preceding claims, wherein the incident light beam ($B_{in}$) is an at least substantially unpolarized light beam.

11. The optical device according to one of the preceding claims, wherein the optical coupler (2) further comprises a second beam polarization converter (40A), wherein the second beam polarization converter (40A) is configured to convert:

> a first initial polarization state of the first source beam ($S_1$) such that the first source beam ($S_1$) has a first converted polarization state, wherein the first initial polarization state is different from the first converted polarization state; and/or
> a second initial polarization state of the second source beam ($S_2$) such that the second source beam ($S_2$) has a second converted polarization state, wherein the second initial polarization state is different from the second converted polarization state.

12. An optical converter (1, 1A) for generating polarized radiation, comprising:

> a multi-mode optical fibre;
> a polarizing beam splitter (20) being configured to split an incident light beam ($B_{in}$) into a first beam ($B_1$) and a second beam ($B_2$), wherein the multi-mode optical fibre is configured to guide the incident light beam to the polarizing beam splitter (20), wherein the incident light beam ($B_{in}$) has an incident light beam profile in a cross-sectional plane perpendicular to a propagation direction of the incident light beam (Bin), wherein
>
> > the first beam ($B_1$) has a first beam profile ($P_1$) in a cross-sectional plane perpendicular to a propagation direction of the first beam ($B_1$), and
> > the second beam ($B_2$) has a second beam profile ($P_2$) in a cross-sectional plane perpendicular to a propagation direction of the second beam (B2),
> > the first beam ($B_1$) having a first polarization state (PS1) and the second beam ($B_2$) having a second polarization state (PS2) being different from the first polarization state (PS1);

a beam recombination unit (50) being configured to combine the first beam ($B_1$) and the second beam ($B_2$) into a single output beam ($B_{out}$) having a final polarization state,
wherein the output beam ($B_{out}$) has an output beam profile ($P_{out}$) in a cross-sectional plane perpendicular to a propagation direction of the output beam ($B_{out}$) and wherein the beam recombination unit (50) is configured to align the first beam ($B_1$) and the second beam ($B_2$) such that the output beam profile ($P_{out}$) substantially corresponds to a beam profile of the first beam profile ($P_1$) being adjacent to the second beam profile ($P_2$); and
a beam polarization converter (40) being configured to either:

- convert either the first polarization state (PS1) of the first beam ($B_1$) to the second polarization state (PS2) or the second polarization state (PS2) of the second beam ($B_2$) to the first polarization state (PS1), such that the output beam has a final polarization state corresponding to either the second polarization state (PS2) or the first polarization state (PS1), respectively, or
- convert the first polarization state (PS1) of the first beam ($B_1$) and the second polarization state (PS2) of the second beam ($B_2$) to a third polarization state different from the first polarization state (PS1) and the second polarization state (PS2), such that the output beam ($B_{out}$) has a final polarization state corresponding to the third polarization state,

wherein the multi-mode optical fibre has a cross-section in a plane perpendicular to a transmission direction of light along the multi-mode optical fibre having a shape substantially identical to the incident light beam profile.

13. The optical converter (1, 1A) according to claim 12, wherein the cross-section of the multi-mode optical fibre is semi-circular, semi-elliptical, or D-shaped.

14. Method (100) of generating polarized radiation, comprising the steps of:

generating, using a light source (10, 10A), a source light beam ($S_{in}$);
splitting the source light beam ($S_{in}$) from the light source (10, 10A) into a first source beam (S1) and a second source beam (S2),
wherein the first source beam ($S_1$) has a first source profile in a plane perpendicular to a propagation direction of the first source beam ($S_1$) that is substantially identical to a second source profile of the second source beam ($S_2$), wherein the first source profile is substantially identical to a predetermined light beam profile;
rotating the first source profile of the first source beam ($S_1$) relative to a beam propagation direction of the first source beam ($S_1$) and/or rotating the second source profile of the second source beam ($S_2$) relative to a beam propagation direction of the second source beam ($S_2$);
combining the first source beam ($S_1$) and the second source beam ($S_2$) into a single light beam ($S_{out}$) having the predetermined light beam profile;
transmitting, using an optical guide, the single light beam ($S_{out}$) having the predetermined light beam profile, wherein the optical guide is a multi-mode optical fibre having a cross-section being substantially identical to the predetermined light beam profile;
splitting an incident light beam ($B_{in}$) into a first beam ($B_1$) and a second beam ($B_2$), wherein the incident light beam ($B_{in}$) is the transmitted single light beam ($S_{out}$), wherein

the first beam ($B_1$) has a first beam profile ($P_1$) in a cross-sectional plane perpendicular to a propagation direction of the first beam ($B_1$),
the second beam ($B_2$) has a second beam profile ($P_2$) in a cross-sectional plane perpendicular to a propagation direction of the second beam (B2), and
the first beam ($B_1$) having a first polarization state (PS1) and the second beam ($B_2$) having a second polarization state (PS2) being different from the first polarization state (PS1);

converting either:

- the first polarization state (PS1) of the first beam ($B_1$) to the second polarization state (PS2), or
- the second polarization state (PS2) of the second beam ($B_2$) to the first polarization state (PS1), or
- the first polarization state (PS1) of the first beam ($B_1$) and the second polarization state (PS2) of the second beam ($B_2$) to a third polarization state different from the first polarization state (PS1) and the second polarization state (PS2); and

combining the first beam ($B_1$) and the second beam ($B_2$) into a single output beam ($B_{out}$) having a final polarization state, wherein the final polarization state corresponds to the second polarization state (PS2), the first polarization state (PS1), or the third polarization state, respectively,

wherein the output beam ($B_{out}$) has an output beam profile ($P_{out}$) in a cross-sectional plane perpendicular to a propagation direction of the output beam ($B_{out}$) and wherein the combining comprises aligning the first beam ($B_1$) and the second beam ($B_2$) such that the output beam profile ($P_{out}$) substantially corresponds to a beam profile of the first beam profile ($P_1$) being adjacent to the second beam profile ($P_2$).

15. Method (100) of generating polarized radiation, comprising the steps of:

guiding, using a multi-mode optical fibre, an incident light beam ($B_{in}$) to a polarizing beam splitter (20); splitting, using the polarizing beam splitter (20), the incident light beam ($B_{in}$) into a first beam ($B_1$) and a second beam ($B_2$), wherein the incident light beam ($B_{in}$) has an incident light beam profile in a cross-sectional plane perpendicular to a propagation direction of the incident light beam ($B_{in}$), wherein

the first beam ($B_1$) has a first beam profile ($P_1$) in a cross-sectional plane perpendicular to a propagation direction of the first beam ($B_1$),

the second beam ($B_2$) has a second beam profile ($P_2$) in a cross-sectional plane perpendicular to a propagation direction of the second beam ($B_2$), and

the first beam ($B_1$) having a first polarization state (PS1) and the second beam ($B_2$) having a second polarization state (PS2) being different from the first polarization state (PS1);

converting either:

- the first polarization state (PS1) of the first beam ($B_1$) to the second polarization state (PS2), or
- the second polarization state (PS2) of the second beam ($B_2$) to the first polarization state (PS1), or
- the first polarization state (PS1) of the first beam ($B_1$) and the second polarization state (PS2) of the second beam ($B_2$) to a third polarization state different from the first polarization state (PS1) and the second polarization state (PS2); and

combining the first beam ($B_1$) and the second beam ($B_2$) into a single output beam ($B_{out}$) having a final polarization state, wherein the final polarization state corresponds to the second polarization state (PS2), the first polarization state (PS1), or the third polarization state, respectively,

wherein the output beam ($B_{out}$) has an output beam profile ($P_{out}$) in a cross-sectional plane perpendicular to a propagation direction of the output beam ($B_{out}$) and wherein the combining comprises aligning the first beam ($B_1$) and the second beam ($B_2$) such that the output beam profile ($P_{out}$) substantially corresponds to a beam profile of the first beam profile ($P_1$) being adjacent to the second beam profile ($P_2$),

wherein the multi-mode optical fibre has a cross-section in a plane perpendicular to a transmission direction of light along the multi-mode optical fibre having a shape substantially identical to the incident light beam profile.

**Patentansprüche**

1. Optische Vorrichtung zum Erzeugen von polarisierter Strahlung, umfassend:

eine Lichtquelle (10, 10A), die derart konfiguriert ist, dass sie einen Quellenlichtstrahl ($S_{in}$) erzeugt; einen Optokoppler (2), der derart konfiguriert ist, dass er einen Einzellichtstrahl ($S_{out}$) mit einem vorbestimmten Lichtstrahlprofil aus dem Quellenlichtstrahl ($S_{in}$) erzeugt, wobei der Optokoppler (2) Folgendes umfasst:

einen Strahlteiler (20A), wobei der Strahlteiler (20A) derart konfiguriert ist, dass er den Quellenlichtstrahl ($S_{in}$) von der Lichtquelle (10, 10A) in einen ersten Quellenstrahl ($S_1$) und einen zweiten Quellenstrahl ($S_2$) aufteilt,

wobei der erste Quellenstrahl ($S_1$) ein erstes Quellenprofil in einer Ebene senkrecht zu einer Ausbreitungsrichtung des ersten Quellenstrahls ($S_1$) aufweist, das im Wesentlichen identisch mit einem zweiten Quellenprofil des zweiten Quellenstrahls ($S_2$) ist, wobei das erste Quellenprofil im Wesentlichen identisch mit dem vorbestimmten Lichtstrahlprofil ist,

eine erste Strahlprofil-Einstelleinheit (30A), wobei die erste Strahlprofil-Einstelleinheit (30A) derart konfiguriert ist, dass sie das erste Quellenprofil des ersten Quellenstrahls ($S_1$) relativ zu einer Strahlausbreitungsrichtung des ersten Quellenstrahls ($S_1$) dreht und/oder das zweite Quellenprofil des zweiten Quellen-

strahls ($S_2$) relativ zu einer Strahlausbreitungsrichtung des zweiten Quellenstrahls ($S_2$) dreht, und eine erste Strahlrekombinationseinheit (50A), wobei die erste Strahlrekombinationseinheit (50A) derart konfiguriert ist, dass sie den ersten Quellenstrahl (S1) und den zweiten Quellenstrahl ($S_2$) zu dem Einzellichtstrahl ($S_{out}$) mit dem vorbestimmten Lichtstrahlprofil kombiniert;

einen optischen Leiter, der derart konfiguriert ist, dass er den Einzellichtstrahl ($S_{out}$) mit dem vorbestimmten Lichtstrahlprofil überträgt, wobei der optische Leiter eine optische Mehrmodus-Faser mit einem Querschnitt ist, der im Wesentlichen mit dem vorbestimmten Lichtstrahlprofil identisch ist; und einen optischen Wandler (1, 1A), der derart konfiguriert ist, dass er einen Einzelausgangsstrahl ($B_{out}$) aus dem übertragenen Einzellichtstrahl ($S_{out}$) mit dem vorbestimmten Lichtstrahlprofil erzeugt, wobei der optische Wandler (1, 1A) Folgendes umfasst:

einen polarisierenden Strahlteiler (20), der derart konfiguriert ist, dass er einen einfallenden Lichtstrahl ($B_{in}$) in einen ersten Strahl ($B_1$) und einen zweiten Strahl ($B_2$) aufteilt, wobei der einfallende Lichtstrahl ($B_{in}$) der übertragene Einzellichtstrahl ($S_{out}$) ist, wobei der erste Strahl ($B_1$) ein erstes Strahlprofil ($P_1$) in einer Querschnittsebene senkrecht zu einer Ausbreitungsrichtung des ersten Strahls ($B_1$) aufweist, wobei der zweite Strahl ($B_2$) ein zweites Strahlprofil ($P_2$) in einer Querschnittsebene senkrecht zu einer Ausbreitungsrichtung des zweiten Strahls ($B_2$) aufweist, wobei der erste Strahl ($B_1$) einen ersten Polarisationszustand (PS1) aufweist und der zweite Strahl ($B_2$) einen zweiten Polarisationszustand (PS2) aufweist, der sich von dem ersten Polarisationszustand (PS1) unterscheidet,

eine zweite Strahlrekombinationseinheit (50), die derart konfiguriert ist, dass sie den ersten Strahl ($B_1$) und den zweiten Strahl ($B_2$) zu dem Einzelausgangsstrahl ($B_{out}$) mit einem finalen Polarisationszustand kombiniert, wobei der Ausgangsstrahl ($B_{out}$) ein Ausgangsstrahlprofil ($P_{out}$) in einer Querschnittsebene senkrecht zu einer Ausbreitungsrichtung des Ausgangsstrahls ($B_{out}$) aufweist und wobei die zweite Strahlrekombinationseinheit (50) derart konfiguriert ist, dass sie den ersten Strahl ($B_1$) und den zweiten Strahl ($B_2$) so ausrichtet, dass das Ausgangsstrahlprofil (Pout) im Wesentlichen einem Strahlprofil des ersten Strahlprofils ($P_1$) entspricht, das zum zweiten Strahlprofil (P2) benachbart liegt, und einem ersten Strahlpolarisationswandler (40) entspricht, der derart konfiguriert ist, dass er entweder:

- den ersten Polarisationszustand (PS1) des ersten Strahls ($B_1$) in den zweiten Polarisationszustand (PS2) oder den zweiten Polarisationszustand (PS2) des zweiten Strahls ($B_2$) in den ersten Polarisationszustand (PS1) umwandelt, so dass der Ausgangsstrahl einen finalen Polarisationszustand aufweist, der entweder jeweils dem zweiten Polarisationszustand (PS2) oder dem ersten Polarisationszustand (PS1) entspricht, oder
- den ersten Polarisationszustand (PS1) des ersten Strahls ($B_1$) und den zweiten Polarisationszustand (PS2) des zweiten Strahls ($B_2$) in einen dritten Polarisationszustand umwandelt, der sich von dem ersten Polarisationszustand (PS1) und dem zweiten Polarisationszustand (PS2) unterscheidet, so dass der Ausgangsstrahl ($B_{out}$) einen finalen Polarisationszustand aufweist, der dem dritten Polarisationszustand entspricht.

2. Optische Vorrichtung nach Anspruch 1, wobei der Querschnitt der optischen Mehrmodus-Faser halbkreisförmig, halbelliptisch oder D-förmig ist.

3. Optische Vorrichtung nach einem der vorhergehenden Ansprüche, wobei der einfallende Lichtstrahl ($B_{in}$) in einer Querschnittsebene senkrecht zu einer Ausbreitungsrichtung des einfallenden Lichtstrahls ($B_{in}$) ein einfallendes Lichtstrahlprofil aufweist, und, optional, wobei das einfallende Lichtstrahlprofil, das erste Strahlprofil ($P_1$) und das zweite Strahlprofil ($P_2$) eine halbkreisförmige oder halbelliptische Form aufweisen, und wobei das Ausgangsstrahlprofil ($P_{out}$) eine im Wesentlichen kreisförmige oder elliptische Form aufweist.

4. Optische Vorrichtung nach einem der vorhergehenden Ansprüche, wobei das erste Strahlprofil ($P_1$) eine Form aufweist, die im Wesentlichen identisch mit einer Form des zweiten Strahlprofils ($P_2$) ist; und/oder wobei mindestens eines von dem ersten Strahlprofil ($P_1$) und dem zweiten Strahlprofil ($P_2$) eine Form aufweist, die im Wesentlichen identisch mit einer Form des einfallenden Lichtstrahlprofils ist.

5. Optische Vorrichtung nach einem der vorhergehenden Ansprüche, wobei die zweite Strahlrekombinationseinheit (50) derart konfiguriert ist, dass sie den ersten Strahl ($B_1$) und den zweiten Strahl ($B_2$) so kombiniert, dass das erste Strahlprofil ($P_1$) und das zweite Profil entlang einer gemeinsamen Kante in der Querschnittsebene senkrecht zu einer Ausbreitungsrichtung des Ausgangsstrahls ($B_{out}$) ausgerichtet sind.

6. Optische Vorrichtung nach einem der vorhergehenden Ansprüche, wobei eine zweite Strahlprofil-Einstelleinheit (30) entlang eines Strahlengangs des ersten Strahls ($B_1$) und/oder eines Strahlengangs des zweiten Strahls ($B_2$) zwischen dem polarisierenden Strahlteiler (20) und der zweiten Strahlrekombinationseinheit (50) angeordnet ist,

> wobei die zweite Strahlprofil-Einstelleinheit (30) derart konfiguriert ist, dass sie jeweils das erste Strahlprofil ($P_1$) des ersten Strahls ($B_1$) um eine Drehachse dreht, die parallel zu einer Strahlausbreitungsrichtung des des ersten Strahls ($B_1$) liegt, und/oder das zweite Strahlprofil ($P_2$) des zweiten Strahls ($B_2$) um eine Drehachse zu dreht, die parallel zu einer Strahlausbreitungsrichtung des zweiten Strahls ($B_2$) liegt, und, optional,
> wobei die zweite Strahlprofil-Einstelleinheit (30) derart konfiguriert ist, dass das erste Strahlprofil ($P_1$) des ersten Strahls ($B_1$) um einen Winkel von 180 Grad gedreht wird.

7. Optische Vorrichtung nach Anspruch 6, wobei die zweite Strahlprofil-Einstelleinheit (30) mindestens einen Spiegel (31, 31A, 32, 32A) umfasst, der derart konfiguriert ist, dass er jeweils den ersten Strahl ($B_1$) oder den zweiten Strahl ($B_2$) reflektiert, und, optional,
wobei der mindestens eine Spiegel (31, 31 A, 32, 32A) mindestens eine hochreflektierende Beschichtung und/oder mindestens ein optisches Gitter und/oder mindestens ein verteiltes Bragg-Reflektorelement umfasst.

8. Optische Vorrichtung nach einem der vorhergehenden Ansprüche, wobei der erste Strahlpolarisationswandler (40) mindestens teilweise entlang eines Strahlengangs des ersten Strahls ($B_1$) und/oder des zweiten Strahls ($B_2$) zwischen dem polarisierenden Strahlteiler (20) und der zweiten Strahlrekombinationseinheit (50) angeordnet ist; und/oder
wobei die zweite Strahlrekombinationseinheit (50) mindestens ein Spiegelelement (51) umfasst, wobei das mindestens eine Spiegelelement (51) derart konfiguriert ist, dass es entweder den ersten Strahl ($B_1$) oder den zweiten Strahl ($B_2$) reflektiert und dem anderen des ersten Strahls ($B_1$) und des zweiten Strahls ($B_2$) ermöglicht hindurchzutreten, um den ersten und den zweiten Strahl ($B_1$, $B_2$) zu einem Einzelausgangsstrahl ($B_{out}$) zu kombinieren.

9. Optische Vorrichtung nach einem der vorhergehenden Ansprüche, wobei der optische Wandler (1, 1A) ferner eine Kühlvorrichtung umfasst, wobei die Kühlvorrichtung thermisch mit mindestens einem der folgenden Elemente gekoppelt ist: dem polarisierenden Strahlteiler (20), dem ersten Strahlpolarisationswandler (40) und/oder der zweiten Strahlrekombinationseinheit (50), und, optional,
wobei die Kühlvorrichtung mindestens ein passives Kühlelement, vorzugsweise einen Kühlkörper, und/oder mindestens ein aktives Kühlelement, vorzugsweise ein thermoelektrisches Element und/oder mindestens ein Fluidkühlelement umfasst.

10. Optische Vorrichtung nach einem der vorhergehenden Ansprüche, wobei der einfallende Lichtstrahl ($B_{in}$) ein mindestens im Wesentlichen unpolarisierter Lichtstrahl ist.

11. Optische Vorrichtung nach einem der vorhergehenden Ansprüche, wobei der Optokoppler (2) ferner einen zweiten Strahlpolarisationswandler (40A) umfasst, wobei der zweite Strahlpolarisationswandler (40A) derart konfiguriert ist, dass er konvertiert:

> einen ersten anfänglichen Polarisationszustand des ersten Quellenstrahls ($S_1$), so dass der erste Quellenstrahl ($S_1$) einen ersten umgewandelten Polarisationszustand aufweist, wobei der erste anfängliche Polarisationszustand von dem ersten umgewandelten Polarisationszustand unterschiedlich ist; und/oder
> einen zweiten anfänglichen Polarisationszustand des zweiten Quellenstrahls ($S_2$), so dass der zweite Quellenstrahl ($S_2$) einen zweiten umgewandelten Polarisationszustand aufweist, wobei der zweite anfängliche Polarisationszustand von dem zweiten umgewandelten Polarisationszustand unterschiedlich ist.

12. Optischer Wandler (1, 1A) zum Erzeugen von polarisierter Strahlung, umfassend:

> eine optische Mehrmodus-Faser;
> einen polarisierenden Strahlteiler (20), der derart konfiguriert ist, dass er einen einfallenden Lichtstrahl ($B_{in}$) in einen ersten Strahl ($B_1$) und einen zweiten Strahl ($B_2$) aufteilt, wobei die optische Mehrmodus-Faser derart konfiguriert ist, dass sie den einfallenden Lichtstrahl zu dem polarisierenden Strahlteiler (20) leitet, wobei der

einfallende Lichtstrahl ($B_{in}$) ein einfallendes Lichtstrahlprofil in einer Querschnittsebene senkrecht zu einer Ausbreitungsrichtung des einfallenden Lichtstrahls ($B_{in}$) aufweist, wobei

der erste Strahl ($B_1$) ein erstes Strahlprofil ($P_1$) in einer Querschnittsebene senkrecht zu einer Ausbreitungsrichtung des ersten Strahls ($B_1$) aufweist, und

der zweite Strahl ($B_2$) ein zweites Strahlprofil ($P_2$) in einer Querschnittsebene senkrecht zu einer Ausbreitungsrichtung des zweiten Strahls ($B_2$) aufweist,

wobei der erste Strahl ($B_1$) einen ersten Polarisationszustand (PS1) und der zweite Strahl ($B_2$) einen zweiten Polarisationszustand (PS2) aufweist, der sich von dem ersten Polarisationszustand (PS1) unterscheidet;

eine Strahlrekombinationseinheit (50), die derart konfiguriert ist, dass sie den ersten Strahl ($B_1$) und den zweiten Strahl ($B_2$) zu einem Einzelausgangsstrahl ($B_{out}$) mit einem finalen Polarisationszustand kombiniert, wobei der Ausgangsstrahl ($B_{out}$) ein Ausgangsstrahlprofil ($P_{out}$) in einer Querschnittsebene senkrecht zu einer Ausbreitungsrichtung des Ausgangsstrahls ($B_{out}$) aufweist und wobei die Strahlrekombinationseinheit (50) derart konfiguriert ist, dass sie den ersten Strahl ($B_1$) und den zweiten Strahl ($B_2$) so ausrichtet, dass das Ausgangsstrahlprofil (Pout) im Wesentlichen einem Strahlprofil des ersten Strahlprofils ($P_1$) entspricht, das zum zweiten Strahlprofil ($P_2$) benachbart liegt; und

einen Strahlpolarisationswandler (40), der derart konfiguriert ist, dass er entweder:

- den ersten Polarisationszustand (PS1) des ersten Strahls ($B_1$) in den zweiten Polarisationszustand (PS2) oder den zweiten Polarisationszustand (PS2) des zweiten Strahls ($B_2$) in den ersten Polarisationszustand (PS1) umwandelt, so dass der Ausgangsstrahl einen finalen Polarisationszustand aufweist, der entweder jeweils dem zweiten Polarisationszustand (PS2) oder dem ersten Polarisationszustand (PS1) entspricht, oder

- den ersten Polarisationszustand (PS1) des ersten Strahls ($B_1$) und den zweiten Polarisationszustand (PS2) des zweiten Strahls ($B_2$) in einen dritten Polarisationszustand umwandelt, der sich von dem ersten Polarisationszustand (PS1) und dem zweiten Polarisationszustand (PS2) unterscheidet, so dass der Ausgangsstrahl ($B_{out}$) einen finalen Polarisationszustand aufweist, der dem dritten Polarisationszustand entspricht,

wobei die optische Mehrmodus-Faser einen Querschnitt in einer Ebene senkrecht zu einer Übertragungsrichtung des Lichts entlang der optischen Mehrmodus-Faser aufweist, der eine Form aufweist, die im Wesentlichen mit dem einfallenden Lichtstrahlprofil identisch ist.

13. Optischer Wandler (1, 1A) nach Anspruch 12, wobei der Querschnitt der optischen Mehrmodus-Faser halbkreisförmig, halbelliptisch oder D-förmig ist.

14. Verfahren (100) zum Erzeugen von polarisierter Strahlung, umfassend die folgenden Schritte:

Erzeugen eines Quellenlichtstrahls ($S_{in}$) unter Verwendung einer Lichtquelle (10, 10A);
Aufteilen des Quellenlichtstrahls ($S_{in}$) der Lichtquelle (10, 10A) in einen ersten Quellenstrahl ($S_1$) und einen zweiten Quellenstrahl ($S_2$),
wobei der erste Quellenstrahl ($S_1$) ein erstes Quellenprofil in einer Ebene senkrecht zu einer Ausbreitungsrichtung des ersten Quellenstrahls ($S_1$) aufweist, das im Wesentlichen identisch mit einem zweiten Quellenprofil des zweiten Quellenstrahls ($S_2$) ist, wobei das erste Quellenprofil im Wesentlichen identisch mit einem vorbestimmten Lichtstrahlprofil ist;
Drehen des ersten Quellenprofils des ersten Quellenstrahls ($S_1$) relativ zu einer Strahlausbreitungsrichtung des ersten Quellenstrahls ($S_1$) und/oder Drehen des zweiten Quellenprofils des zweiten Quellenstrahls ($S_2$) relativ zu einer Strahlausbreitungsrichtung des zweiten Quellenstrahls ($S_2$);
Kombinieren des ersten Quellenstrahls ($S_1$) und des zweiten Quellenstrahls ($S_2$) zu einem Einzellichtstrahl ($S_{out}$) mit dem vorgegebenen Lichtstrahlprofil;
Übertragen, unter Verwendung des optischen Leiters, des Einzellichtstrahls ($S_{out}$) mit dem vorbestimmten Lichtstrahlprofil, wobei der optische Leiter eine optische Mehrmodus-Faser mit einem Querschnitt ist, der im Wesentlichen mit dem vorbestimmten Lichtstrahlprofil identisch ist;
Aufteilen eines einfallenden Lichtstrahls ($B_{in}$) in einen ersten Strahl ($B_1$) und einen zweiten Strahl ($B_2$), wobei der einfallende Lichtstrahl ($B_{in}$) der übertragene Einzellichtstrahl ($S_{out}$) ist, wobei

der erste Strahl ($B_1$) ein erstes Strahlprofil ($P_1$) in einer Querschnittebene senkrecht zu einer Ausbreitungs-

richtung des ersten Strahls (B$_1$) aufweist,

der zweite Strahl (B$_2$) ein zweites Strahlprofil (P$_2$) in einer Querschnittsebene senkrecht zu einer Ausbreitungsrichtung des zweiten Strahls (B2) aufweist, und

wobei der erste Strahl (B$_1$) einen ersten Polarisationszustand (PS1) und der zweite Strahl (B$_2$) einen zweiten Polarisationszustand (PS2) aufweist, der sich von dem ersten Polarisationszustand (PS1) unterscheidet;

Umwandeln von entweder:

- dem ersten Polarisationszustand (PS1) des ersten Strahls (B$_1$) in den zweiten Polarisationszustand (PS2), oder
- dem zweiten Polarisationszustand (PS2) des zweiten Strahls (B$_2$) in den ersten Polarisationszustand (PS1) oder
- dem ersten Polarisationszustand (PS1) des ersten Strahls (B$_1$) und dem zweiten Polarisationszustand (PS2) des zweiten Strahls (B$_2$) in einen dritten Polarisationszustand, der sich von dem ersten Polarisationszustand (PS1) und dem zweiten Polarisationszustand (PS2) unterscheidet; und

Kombinieren des ersten Strahls (B$_1$) und des zweiten Strahls (B$_2$) zu einem Einzelausgangsstrahl (B$_{out}$) mit einem finalen Polarisationszustand, wobei der finale Polarisationszustand jeweils dem zweiten Polarisationszustand (PS2), dem ersten Polarisationszustand (PS1) oder dem dritten Polarisationszustand entspricht, wobei der Ausgangsstrahl (B$_{out}$) ein Ausgangsstrahlprofil (P$_{out}$) in einer Querschnittsebene senkrecht zu einer Ausbreitungsrichtung des Ausgangsstrahls (B$_{out}$) umfasst und wobei das Kombinieren das Ausrichten des ersten Strahls (B$_1$) und des zweiten Strahls (B$_2$) umfasst, so dass das Ausgangsstrahlprofil (P$_{out}$) im Wesentlichen einem Strahlprofil des ersten Strahlprofils (P$_1$) entspricht, das benachbart zu dem zweiten Strahlprofil (P$_2$) liegt.

15. Verfahren (100) zum Erzeugen von polarisierter Strahlung, umfassend die folgenden Schritte:

Leiten, unter Verwendung einer optischen Mehrmodus-Faser, eines einfallenden Lichtstrahls (B$_{in}$) zu einem polarisierenden Strahlteiler (20);

Aufteilen, unter Verwendung des polarisierenden Strahlteilers (20), des einfallenden Lichtstrahls (B$_{in}$) in einen ersten Strahl (B$_1$) und einen zweiten Strahl (B$_2$), wobei der einfallende Lichtstrahl (B$_{in}$) ein einfallendes Lichtstrahlprofil in einer Querschnittebene senkrecht zu einer Ausbreitungsrichtung des einfallenden Lichtstrahls (B$_{in}$) aufweist, wobei

der erste Strahl (B$_1$) ein erstes Strahlprofil (P$_1$) in einer Querschnittebene senkrecht zu einer Ausbreitungsrichtung des ersten Strahls (B$_1$) aufweist,

der zweite Strahl (B$_2$) ein zweites Strahlprofil (P$_2$) in einer Querschnittebene senkrecht zu einer Ausbreitungsrichtung des zweiten Strahls (B$_2$) aufweist, und

wobei der erste Strahl (B$_1$) einen ersten Polarisationszustand (PS1) und der zweite Strahl (B$_2$) einen zweiten Polarisationszustand (PS2) aufweist, der sich von dem ersten Polarisationszustand (PS1) unterscheidet;

Umwandeln von entweder:

- dem ersten Polarisationszustand (PS1) des ersten Strahls (B$_1$) in den zweiten Polarisationszustand (PS2), oder
- dem zweiten Polarisationszustand (PS2) des zweiten Strahls (B$_2$) in den ersten Polarisationszustand (PS1) oder
- dem ersten Polarisationszustand (PS1) des ersten Strahls (B$_1$) und dem zweiten Polarisationszustand (PS2) des zweiten Strahls (B$_2$) in einen dritten Polarisationszustand, der sich von dem ersten Polarisationszustand (PS1) und dem zweiten Polarisationszustand (PS2) unterscheidet; und

Kombinieren des ersten Strahls (B$_1$) und des zweiten Strahls (B$_2$) zu einem Einzelausgangsstrahl (B$_{out}$) mit einem finalen Polarisationszustand, wobei der finale Polarisationszustand jeweils dem zweiten Polarisationszustand (PS2), dem ersten Polarisationszustand (PS1) oder dem dritten Polarisationszustand entspricht, wobei der Ausgangsstrahl (B$_{out}$) ein Ausgangsstrahlprofil (P$_{out}$) in einer Querschnittsebene senkrecht zu einer Ausbreitungsrichtung des Ausgangsstrahls (B$_{out}$) umfasst und wobei das Kombinieren das Ausrichten des ersten Strahls (B$_1$) und des zweiten Strahls (B$_2$) umfasst, so dass das Ausgangsstrahlprofil (P$_{out}$) im Wesentlichen einem Strahlprofil des ersten Strahlprofils (P$_1$) entspricht, das benachbart zu dem zweiten Strahlprofil

($P_2$) liegt,
wobei die optische Mehrmodus-Faser einen Querschnitt in einer Ebene senkrecht zu einer Übertragungsrichtung des Lichts entlang der optischen Mehrmodus-Faser aufweist, der eine Form aufweist, die im Wesentlichen mit dem einfallenden Lichtstrahlprofil identisch ist.

## Revendications

1. Dispositif optique destiné à générer un rayonnement polarisé, comprenant :

une source lumineuse (10, 10A) configurée pour générer un faisceau lumineux source ($S_{in}$) ;
un coupleur optique (2) configuré pour générer un faisceau lumineux unique ($S_{out}$) présentant un profil de faisceau lumineux prédéterminé à partir du faisceau lumineux source ($S_{in}$), le coupleur optique (2) comprenant :

un séparateur de faisceau (20A), dans lequel le séparateur de faisceau (20A) est configuré pour séparer le faisceau lumineux source ($S_{in}$) de la source lumineuse (10, 10A) en un premier faisceau source ($S_1$) et un deuxième faisceau source ($S_2$),
dans lequel le premier faisceau source ($S_1$) présente un premier profil source dans un plan perpendiculaire à une direction de propagation du premier faisceau source ($S_1$) qui est sensiblement identique à un deuxième profil source du deuxième faisceau source ($S_2$), dans lequel le premier profil source est sensiblement identique au profil de faisceau source prédéterminé,
une première unité d'ajustement de profil de faisceau (30A), dans lequel la première unité d'ajustement de profil de faisceau (30A) est configurée pour faire tourner le premier profil source du premier faisceau source ($S_1$) par rapport à une direction de propagation de faisceau du premier faisceau source ($S_1$) et/ou pour faire tourner le deuxième profil source du deuxième faisceau source ($S_2$) par rapport à une direction de propagation de faisceau du deuxième faisceau source ($S_2$), et
une première unité de recombinaison de faisceau (50A), dans lequel la première unité de recombinaison de faisceau (50A) est configurée pour combiner le premier faisceau source ($S_1$) et le deuxième faisceau source ($S_2$) en le faisceau lumineux unique ($S_{out}$) présentant le profil de faisceau lumineux prédéterminé ;

un guide optique configuré pour transmettre le faisceau lumineux optique ($S_{out}$) présentant le profil de faisceau lumineux prédéterminé, dans lequel le guide optique est une fibre optique multimode présentant une section transversale sensiblement identique au profil de faisceau lumineux prédéterminé ; et
un convertisseur optique (1, 1A) configuré pour générer un faisceau de sortie unique ($B_{out}$) à partir du faisceau lumineux unique transmis ($S_{out}$) présentant le profil de faisceau lumineux prédéterminé, le convertisseur optique (1, 1A) comprenant :

un séparateur de faisceau polarisant (20) configuré pour séparer un faisceau lumineux incident ($B_{in}$) en un premier faisceau ($B_1$) et un deuxième faisceau ($B_2$), dans lequel le faisceau lumineux incident ($B_{in}$) est le faisceau lumineux unique transmis ($S_{out}$),
dans lequel le premier faisceau ($B_1$) présente un premier profil de faisceau ($P_1$) dans un plan de section transversale perpendiculaire à une direction de propagation du premier faisceau ($B_1$), dans lequel le deuxième faisceau ($B_2$) présente un deuxième profil de faisceau ($P_2$) dans un plan de section transversale perpendiculaire à une direction de propagation du deuxième faisceau ($B_2$), dans lequel le premier faisceau ($B_1$) présente un premier état de polarisation (PS1) et le deuxième faisceau ($B_2$) présente un deuxième état de polarisation (PS2) différent du premier état de polarisation (PS1),
une deuxième unité de recombinaison de faisceau (50) configurée pour combiner le premier faisceau ($B_1$) et le deuxième faisceau ($B_2$) en le faisceau de sortie unique ($B_{out}$) présentant un état de polarisation final, dans lequel le faisceau de sortie ($B_{out}$) présente un profil de faisceau de sortie ($P_{out}$) dans un plan de section transversale perpendiculaire à une direction de propagation du faisceau de sortie ($B_{out}$) et dans lequel la deuxième unité de recombinaison de faisceau (50) est configurée pour aligner le premier faisceau ($B_1$) et le deuxième faisceau ($B_2$) de telle sorte que le profil de faisceau de sortie ($P_{out}$) correspond sensiblement à un profil de faisceau du premier profil de faisceau ($P_1$) adjacent au deuxième profil de faisceau ($P_2$), et
un premier convertisseur de polarisation de faisceau (40) configuré pour soit :

convertir soit le premier état de polarisation (PS1) du premier faisceau ($B_1$) en le deuxième état de polarisation (PS2) soit le deuxième état de polarisation (PS2) du deuxième faisceau ($B_2$) en le premier état de polarisation (PS1) de telle sorte que le faisceau de sortie présente un état de polarisation final correspondant soit au deuxième état de polarisation (PS2) soit au premier état de polarisation (PS1) respectivement, ou

convertir le premier état de polarisation (PS1) du premier faisceau ($B_1$) et le deuxième état de polarisation (PS2) du deuxième faisceau ($B_2$) dans un troisième état de polarisation différent du premier état de polarisation (PS1) et du deuxième état de polarisation (PS2) de telle sorte que le faisceau de sortie ($B_{out}$) présente un état de polarisation final correspondant au troisième état de polarisation.

2. Dispositif optique selon la revendication 1, dans lequel la section transversale de la fibre optique multimode est semi-circulaire, semi-elliptique ou en forme de D.

3. Dispositif optique selon l'une quelconque des revendications précédentes, dans lequel le faisceau lumineux incident ($B_{in}$) présente un profil de faisceau lumineux incident dans un plan de section transversale perpendiculaire à une direction de propagation du faisceau lumineux incident ($B_{in}$), et, en option,

dans lequel le profil de faisceau lumineux incident, le premier profil de faisceau ($P_1$) et le deuxième profil de faisceau ($P_2$) présentent une forme semi-circulaire ou semi-elliptique, et dans lequel le profil de faisceau de sortie ($P_{out}$) présente une forme sensiblement circulaire ou elliptique.

4. Dispositif optique selon l'une quelconque des revendications précédentes, dans lequel le premier profil de faisceau ($P_1$) présente une forme sensiblement identique à une forme du deuxième profil de faisceau ($P_2$) ; et/ou

dans lequel au moins un du premier profil de faisceau ($P_1$) et du deuxième profil de faisceau ($P_2$) présente une forme sensiblement identique à une forme du profil de faisceau lumineux incident.

5. Dispositif optique selon l'une quelconque des revendications précédentes, dans lequel la deuxième unité de recombinaison de faisceau (50) est configurée pour combiner le premier faisceau ($B_1$) et le deuxième faisceau ($B_2$) de telle manière que le premier profil de faisceau ($P_1$) et le deuxième profil sont alignés le long d'un bord partagé dans le plan de section transversale perpendiculaire à une direction de propagation du faisceau de sortie ($B_{out}$).

6. Dispositif optique selon l'une quelconque des revendications précédentes, dans lequel une deuxième unité d'ajustement de profil de faisceau (30) est disposée le long d'un trajet de faisceau du premier faisceau ($B_1$) et/ou d'un trajet de faisceau du deuxième faisceau ($B_2$) entre le séparateur de faisceau polarisant (20) et la deuxième unité de recombinaison de faisceau (50),

dans lequel la deuxième unité d'ajustement de profil de faisceau (30) est configurée pour faire tourner le premier profil de faisceau ($P_1$) du premier faisceau ($B_1$) autour d'un axe de rotation parallèle à une direction de propagation de faisceau du premier faisceau ($B_1$) et/ou pour faire tourner le deuxième profil de faisceau ($P_2$) du deuxième faisceau ($B_2$) autour d'un axe de rotation parallèle à une direction de propagation de faisceau du deuxième faisceau ($B_2$) respectivement et, en option,

dans lequel la deuxième unité d'ajustement de profil (30) est configurée pour faire tourner le premier profil de faisceau ($P_1$) du premier faisceau ($B_1$) d'un angle de 180 degrés.

7. Dispositif optique selon la revendication 6, dans lequel la deuxième unité d'ajustement de profil de faisceau (30) comprend au moins un miroir (31, 31A, 32, 32A) configuré pour réfléchir le premier faisceau ($B_1$) ou le deuxième faisceau ($B_2$), respectivement, et, en option,

dans lequel l'au moins un miroir (31, 31A, 32, 32A) comprend au moins un revêtement à haute réflexion et/ou au moins un réseau optique et/ou au moins un élément réflecteur de Bragg distribué.

8. Dispositif optique selon l'une quelconque des revendications précédentes, dans lequel le premier convertisseur de polarisation de faisceau (40) est disposé au moins en partie le long d'un trajet de faisceau du premier faisceau ($B_1$) et/ou du deuxième faisceau ($B_2$) entre le séparateur de faisceau polarisant (20) et la deuxième unité de recombinaison de faisceau (50) ; et/ou

dans lequel la deuxième unité de recombinaison de faisceau (50) comprend au moins un élément de miroir (51), dans lequel l'au moins un élément de miroir (51) est configuré pour réfléchir un du premier faisceau ($B_1$) et du deuxième faisceau ($B_2$) et pour permettre à l'autre du premier faisceau ($B_1$) et du deuxième faisceau ($B_2$) de passer pour recombiner les premier et deuxième faisceaux ($B_1$, $B_2$) pour former le faisceau de sortie unique ($B_{out}$).

9. Dispositif optique selon l'une quelconque des revendications précédentes, dans lequel le convertisseur optique (1, 1A) comprend en outre un dispositif de refroidissement, dans lequel le dispositif de refroidissement est couplé thermiquement à au moins un du séparateur de faisceau polarisant (20), du premier convertisseur de polarisation de faisceau (40) et/ou de la deuxième unité de recombinaison de faisceau (50), et, en option, dans lequel le dispositif de refroidissement comprend au moins un élément de refroidissement passif, de préférence un dissipateur thermique, et/ou au moins un élément de refroidissement actif, de préférence un élément thermoélectrique, et/ou au moins un élément de refroidissement de fluide.

**10.** Dispositif optique selon l'une quelconque des revendications précédentes, dans lequel le faisceau lumineux incident ($B_{in}$) est un faisceau lumineux au moins sensiblement non polarisé.

**11.** Dispositif optique selon l'une quelconque des revendications précédentes, dans lequel le coupleur optique (2) comprend en outre un deuxième convertisseur de polarisation de faisceau (40A), dans lequel le deuxième convertisseur de polarisation de faisceau (40A) est configuré pour convertir :

un premier état de polarisation initial du premier faisceau source ($S_1$) de telle sorte que le premier faisceau source ($S_1$) présente un premier état de polarisation converti, dans lequel le premier état de polarisation initial est différent du premier état de polarisation converti ; et/ou
un deuxième état initial de polarisation du deuxième faisceau source ($S_2$) de telle sorte que le deuxième faisceau source ($S_2$) présente un deuxième état de polarisation converti, dans lequel le deuxième état de polarisation initial est différent du deuxième état de polarisation converti.

**12.** Convertisseur optique (1, 1A) destiné à générer un rayonnement polarisé, comprenant :

une fibre optique multimode ;
un séparateur de faisceau polarisant (20) configuré pour séparer un faisceau lumineux incident ($B_{in}$) en un premier faisceau ($B_1$) et un deuxième faisceau ($B_2$), dans lequel la fibre optique multimode est configurée pour guider le faisceau lumineux incident au séparateur de faisceau polarisant (20), dans lequel le faisceau lumineux incident ($B_{in}$) présente un profil de faisceau lumineux incident dans un plan de section transversale perpendiculaire à une direction de propagation du faisceau lumineux incident ($B_{in}$),
dans lequel

le premier faisceau ($B_1$) présente un premier profil de faisceau ($P_1$) dans un plan de section transversale perpendiculaire à une direction de propagation du premier faisceau ($B_1$), et
le deuxième faisceau ($B_2$) présente un deuxième profil de faisceau ($P_2$) dans un plan de section transversale perpendiculaire à une direction de propagation du deuxième faisceau ($B_2$),
le premier faisceau ($B_1$) présente un premier état de polarisation (PS1) et le deuxième faisceau ($B_2$) présente un deuxième état de polarisation (PS2) différent du premier état de polarisation (PS1) ;

une unité de recombinaison de faisceau (50) configurée pour combiner le premier faisceau ($B_1$) et le deuxième faisceau ($B_2$) en un faisceau de sortie unique ($B_{out}$) présentant un état de polarisation final, dans lequel le faisceau de sortie ($B_{out}$) présente un profil de faisceau de sortie ($P_{out}$) dans un plan de section transversale perpendiculaire à une direction de propagation du faisceau de sortie ($B_{out}$) et dans lequel l'unité de recombinaison de faisceau (50) est configurée pour aligner le premier faisceau ($B_1$) et le deuxième faisceau ($B_2$) de telle sorte que le profil de faisceau de sortie ($P_{out}$) correspond sensiblement à un profil de faisceau du premier profil de faisceau ($P_1$) adjacent au deuxième profil de faisceau ($P_2$) ; et
un convertisseur de polarisation de faisceau (40) configuré pour soit :

convertir soit le premier état de polarisation (PS1) du premier faisceau ($B_1$) en le deuxième état de polarisation (PS2) soit le deuxième état de polarisation (PS2) du deuxième faisceau ($B_2$) en le premier état de polarisation (PS1) de telle sorte que le faisceau de sortie présente un état de polarisation final correspondant soit au deuxième état de polarisation (PS2) soit au premier état de polarisation (PS1) respectivement, soit convertir le premier état de polarisation (PS1) du premier faisceau ($B_1$) et le deuxième état de polarisation (PS2) du deuxième faisceau ($B_2$) en un troisième état de polarisation différent du premier état de polarisation (PS1) et du deuxième état de polarisation (PS2) de telle sorte que le faisceau de sortie ($B_{out}$) présente un état de polarisation final correspondant au troisième état de polarisation,

dans lequel la fibre optique multimode présente une section transversale dans un plan perpendiculaire à une direction de transmission de lumière le long de la fibre optique multimode présentant une forme sensiblement identique au profil de faisceau lumineux incident.

**13.** Convertisseur optique (1, 1A) selon la revendication 12, dans lequel la section transversale de la fibre optique multimode est semi-circulaire, semi-elliptique ou en forme de D.

**14.** Procédé (100) de génération d'un rayonnement polarisé, comprenant les étapes de :

génération, en utilisant une source lumineuse (10, 10A) d'un faisceau lumineux source ($S_{in}$) ;

de séparation du faisceau lumineux source ($S_{in}$) provenant de la source lumineuse (10, 10A) en un premier faisceau source ($S_1$) et en un deuxième faisceau source ($S_2$),

dans lequel le premier faisceau source ($S_1$) présente un premier profil source dans un plan perpendiculaire à une direction de propagation du premier faisceau source ($S_1$) qui est sensiblement identique à un deuxième profil source du deuxième faisceau source ($S_2$),

dans lequel le premier profil source est sensiblement identique à un profil de faisceau lumineux prédéterminé ;

rotation du premier profil source du premier faisceau source ($S_1$) par rapport à une direction de propagation de faisceau du premier faisceau source ($S_1$) et/ou de rotation du deuxième profil source du deuxième faisceau source ($S_2$) par rapport à une direction de propagation de faisceau du deuxième faisceau source ($S_2$) ;

combinaison du premier faisceau source ($S_1$) et du deuxième faisceau source ($S_2$) en un faisceau lumineux unique ($S_{out}$) présentant le profil de faisceau lumineux prédéterminé ;

transmission, en utilisant un guide optique, du faisceau lumineux unique ($S_{out}$) présentant le profil de faisceau lumineux prédéterminé, dans lequel le guide optique est une fibre optique multimode présentant une section transversale sensiblement identique au profil de faisceau lumineux prédéterminé ;

séparation d'un faisceau lumineux incident ($B_{in}$) en un premier faisceau ($B_1$) et un deuxième faisceau ($B_2$), dans lequel le faisceau lumineux incident ($B_{in}$) est le faisceau lumineux unique transmis ($S_{out}$),

dans lequel

le premier faisceau ($B_1$) présente un premier profil de faisceau ($P_1$) dans un plan de section transversale perpendiculaire à une direction de propagation du premier faisceau ($B_1$),

le deuxième faisceau ($B_2$) présente un deuxième profil de faisceau ($P_2$) dans un plan de section transversale perpendiculaire à une direction de propagation du deuxième faisceau ($B_2$), et

le premier faisceau ($B_1$) présente un premier état de polarisation (PS1) et le deuxième faisceau ($B_2$) présente un deuxième état de polarisation (PS2) différent du premier état de polarisation (PS1) ;

conversion soit

du premier état de polarisation (PS1) du premier faisceau ($B_1$) en le deuxième état de polarisation (PS2) ; soit du deuxième état de polarisation (PS2) du deuxième faisceau ($B_2$) en le premier état de polarisation (PS1), soit

du premier état de polarisation (PS1) du premier faisceau ($B_1$) et du deuxième état de polarisation (PS2) du deuxième faisceau ($B_2$) en un troisième état de polarisation différent du premier état de polarisation (PS1) et du deuxième état de polarisation (PS2) ; et

combinaison du premier faisceau ($B_1$) et du deuxième faisceau ($B_2$) en un faisceau de sortie unique ($B_{out}$) présentant un état de polarisation final, dans lequel l'état de polarisation final correspond au deuxième état de polarisation (PS2), au premier état de polarisation (PS1) ou au troisième état de polarisation respectivement, dans lequel le faisceau de sortie ($B_{out}$) présente un profil de faisceau de sortie ($P_{out}$) dans un plan de section transversale perpendiculaire à une direction de propagation du faisceau de sortie ($B_{out}$) et dans lequel la combinaison comprend l'alignement du premier faisceau ($B_1$) et du deuxième faisceau ($B_2$) de telle sorte que le profil de faisceau de sortie ($P_{out}$) correspond sensiblement à un profil de faisceau du premier profil de faisceau ($P_1$) adjacent au deuxième profil de faisceau ($P_2$).

**15.** Procédé (100) de génération d'un rayonnement polarisé, comprenant les étapes de :

guidage, en utilisant une fibre optique multimode, d'un faisceau lumineux incident ($B_{in}$) vers un séparateur de faisceau polarisant (20) ;

séparation, en utilisant le séparateur de faisceau polarisant (20), du faisceau lumineux incident ($B_{in}$) en un premier faisceau ($B_1$) et un deuxième faisceau ($B_2$), dans lequel le faisceau lumineux incident ($B_{in}$) présente un profil de faisceau lumineux incident dans un plan de section transversale perpendiculaire à une direction de propagation du faisceau lumineux incident ($B_{in}$), dans lequel

e premier faisceau (B$_1$) présente un premier profil de faisceau (P1) dans un plan de section transversale perpendiculaire à une direction de propagation du premier faisceau (B$_1$),

le deuxième faisceau (B$_2$) présente un deuxième profil de faisceau (P$_2$) dans un plan de section transversale perpendiculaire à une direction de propagation du deuxième faisceau (B$_2$), et

le premier faisceau (B$_1$) présente un premier état de polarisation (PS1) et le deuxième faisceau (B$_2$) présente un deuxième état de polarisation (PS2) différent du premier état de polarisation (PS1) ;

conversion soit :

du premier état de polarisation (PS1) du premier faisceau (B$_1$) en le deuxième état de polarisation (PS2), soit du deuxième état de polarisation (PS2) du deuxième faisceau (B$_2$) en le premier état de polarisation (PS1), soit

du premier état de polarisation (PS1) du premier faisceau (B$_1$) et du deuxième état de polarisation (PS2) du deuxième faisceau (B$_2$) en un troisième état de polarisation différent du premier état de polarisation (PS1) et du deuxième état de polarisation (PS2) ; et

combinaison du premier faisceau (B$_1$) et du deuxième faisceau (B$_2$) en un faisceau de sortie unique (B$_{out}$) présentant un état de polarisation final, dans lequel l'état de polarisation final correspond au deuxième état de polarisation (PS2), au premier état de polarisation (PS1), ou au troisième état de polarisation respectivement,

dans lequel le faisceau de sortie (B$_{out}$) présente un profil de faisceau de sortie (P$_{out}$) dans un plan de section transversale perpendiculaire à une direction de propagation du faisceau de sortie (B$_{out}$) et

dans lequel la combinaison comprend l'alignement du premier faisceau (B$_1$) et du deuxième faisceau (B$_2$) de telle sorte que le profil de faisceau de sortie (P$_{out}$) correspond sensiblement à un profil de faisceau du premier profil de faisceau (P$_1$) adjacent au deuxième profil de faisceau (P$_2$),

dans lequel la fibre optique multimode présente une section transversale dans un plan perpendiculaire à une direction de transmission de lumière le long de la fibre optique multimode présentant une forme sensiblement identique au profil de faisceau lumineux incident.

Figure 1A

Figure 1B

Figure 1C

Figure 1D

Figure 1E

Figure 1F

Figure 1G

Figure 2

Figure 3

Figure 4

Figure 5A

Figure 5B

Figure 6A

EP 3 929 652 B1

Figure 6B

Figure 6C

Figure 6D

Figure 6E

Figure 6F

Figure 6G

101

100

**Splitting an incident light beam into a first beam and a second beam**

102

103

| Converting the first polarization state to the second polarization state | Rotating the first beam profile and/or the second beam profile |

104

**Combining the first beam and the second beam into a single output beam having the second polarization state**

## Figure 7

Figure 8

**EP 3 929 652 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0467447 A1
- US 10654130 B2